# EUROPEAN PATENT APPLICATION

(11) **EP 4 549 811 A1**
(43) Date of publication of application: **07.05.2025**
(21) Application number: 23831630.1
(22) Date of filing: 30.06.2023
(51) Int. Cl.: F21S 11/00, G02B 5/00, G02B 6/00

(54) **LIGHT GUIDE**

(30) Priority: 01.07.2022 JP 2022107298
(71) Applicant: HONDA MOTOR CO., LTD., Minato-ku Tokyo 107-8556 (JP)
(72) Inventor: OKIMITSU, Takeomi, Wako-shi, Saitama 351-0193 (JP)
(74) Representative: Weickmann & Weickmann PartmbB
(86) International application number: PCT/JP2023/024402
(87) International publication number: WO 2024/005191

(57) **Abstract**

[Solution] A light guide 1 guides light input from a light entrance surface 10a to a light exit surface 20a, which is different from the light entrance surface, so that the light is output from the light exit surface, and includes: a light entrance section 10 having the light entrance surface in which the light is input in a Z-axis direction; a light guiding section 20 which is arranged closer to the light exit surface and which guides the light in a Y-axis direction so that the light is output from the light exit surface; and a continuous section 31 and a non-continuous section 32 each arranged at a boundary between the light entrance section and the light guiding section, the continuous section 31 being provided so that the light entrance section and the light guiding section are continuously connected and the non-continuous section 32 being provided so that the light entrance section and the light guiding section are spaced apart from one another. According to the above, the light collected by the light entrance section can be output from the light exit surface almost without leaking, by causing the light, which is input to the light entrance section in the Z-axis direction via the light entrance surface, to enter the light guiding section via the continuous section arranged at the boundary between the light entrance section and the light guiding section to continuously connect them and guiding the light within the light guiding section in the Y-axis direction.

## Description

### BACKGROUND

### 1. TECHNICAL FIELD

The present invention relates to a light guide.

### 2. RELATED ART

In order to reduce emissions of carbon dioxide, utilization of regenerative energy such as photovoltaics has been accelerated. However, conversion efficiency from light to electricity may not be high. Therefore, there has been developed a sunlight illumination system designed for efficient utilization of sunlight by collecting and guiding the sunlight to another location to be used for illumination without being converted into electricity. For example, Patent Document 1 discloses a light capturing device including a light guiding section extending in parallel from a plane of incidence in which light is input and a plurality of light collecting elements which are connected with the light guiding section to gradually narrow and each of which has a light collecting section where a reflective surface is provided on an end, a plurality of coupled waveguides which guide the light entering from the plurality of light collecting elements via each reflective surface, and an integrated waveguide which is connected with the plurality of coupled waveguide and which collects the light. The light collecting element in such a light capturing device may not have high light collecting efficiency because, while it collects plenty of light, it leaks the collected light from the light collecting element if the light reverses.
Patent Document 1: Japanese Patent Application Publication No. 2008-251468

### General disclosure

### (Item1)

A light guide may guide light input from a light entrance surface to a light exit surface, which is different from the light entrance surface, so that the light is output from the light exit surface.

The light guide may include a light entrance section having the light entrance surface provided so that the light is input from a first direction.

The light guide may include a light guiding section which is arranged closer to the light exit surface than the light entrance section and which guides the light in a second direction intersecting the first direction so that the light is output from the light exit surface.

The light guide may include a continuous section and a non-continuous section each arranged at a boundary between the light entrance section and the light guiding section, the continuous section being provided so that the light entrance section and the light guiding section are continuously connected and the non-continuous section being provided so that the light entrance section and the light guiding section are spaced apart from one another.

### (Item 2)

A plurality of continuous sections, each being the continuous section, and a plurality of non-continuous sections, each being the non-continuous section, may each be provided at the boundary between the light entrance section and the light guiding section, and the plurality of continuous sections and the plurality of non-continuous sections may be alternately arranged along the second direction.

### (Item 3)

The continuous section and the non-continuous section may be arranged so that a length of the continuous section is shorter than a length of the non-continuous section in the second direction.

### (Item 4)

The light entrance section may have a reflective surface provided to reflect the light input from the light entrance surface toward the continuous section.

### (Item 5)

The reflective surface may be formed to reflect the light input from a direction orthogonal to the light entrance surface toward the continuous section.

### (Item 6)

The reflective surface may be formed to be curved or bent on a cross-section including the first direction and the second direction.

### (Item 7)

The light guide may further have another reflective surface which is arranged to be opposed to the reflective surface and which reflects the light input from the light entrance surface toward the continuous section.

### (Item 8)

The light entrance section may extend in the second direction.

The light entrance surface may be formed in a planar shape having a width in a third direction intersecting each of the first direction and the second direction.

### (Item 9)

The light guiding section may be formed to extend in the second direction.

### (Item 10)

An end, on a side opposite to the light entrance section, of the light guiding section in the first direction may be formed in a planar shape.

### (Item 11)

The continuous section may be formed to extend in the third direction.

### (Item 12)

The continuous section may be arranged so that the third direction is substantially parallel to a plane including a trajectory of the sun.

### (Item 13)

The light entrance section and the light guiding section may each be formed as a body separate from one another and formed by being joined to one another via the continuous section.

### (Item 14)

The light entrance section and the light guiding section may be joined by welding.

### (Item 15)

The light entrance section and the light guiding section may be formed of a same material.

### (Item 16)

The non-continuous section may include a first non-continuous section in which a separation distance between the light entrance section and the light guiding section is constant along the second direction and a second non-continuous section in which a separation distance between the light entrance section and the light guiding section is inconstant along the second direction.

### (Item 17)

The light entrance section may have a reflective surface provided to reflect the light input from the light entrance surface toward the continuous section.

An opposite surface, facing toward a side with the light guiding section, of the reflective surface may be provided to constitute an end, on a side with the light entrance section, of the second non-continuous section.

### (Item 18)

The light guide may further include a light collecting section which is arranged on a side opposite to the light entrance section with respect to the light guiding section in the first direction and which is provided so that the light passing through the light guiding section is input to the light collecting section.

### (Item 19)

The light guide may further include another continuous section and another non-continuous section each arranged at another boundary between the light guiding section and the light collecting section, the another continuous section being provided so that the light guiding section and the light collecting section continuously connected and the another non-continuous section being provided so that the light guiding section and the light collecting section are spaced apart from one another.

### (Item 20)

The light collecting section may include a light returning section which returns leaked light leaked from the light guiding section to the light guiding section.

### (Item 21)

The light returning section may have a reflective surface which reflects the leaked light toward the another continuous section.

### (Item 22)

The light returning section may have a refractive surface which refracts the leaked light reflected by the reflective surface toward the another continuous section.

### (Item 23)

The reflective surface of the light returning section may be arranged to be offset from the reflective surface of the light entrance section in the second direction.

### (Item 24)

The another continuous section may be shorter than the another non-continuous section in the second direction, and a center of the another continuous section may be arranged to be offset from the reflective surface of the light returning section and the reflective surface of the light entrance section in the second direction.

### (Item 25)

At least a part of the continuous section and at least a part of the another non-continuous section may be provided to be overlapped with one another when viewed in the first direction.

### (Item 26)

The another non-continuous section may be provided so that a separation distance between the light guiding section and the light collecting section is constant along the second direction.

### (Item 27)

The light entrance section may have a reflective surface provided to reflect the light input from the light entrance surface and the reflective surface may be formed in a linear shape on a cross-section including the first direction and the second direction.

### (Item 28)

The non-continuous section may be provided so that an end, on a side with the light guiding section, of the non-continuous section extends to be inclined with respect to the second direction.

The summary clause does not necessarily describe all necessary features of the embodiments of the present invention. In addition, the invention may also be a sub-combination of the features described above.

### BRIEF DESCRIPTION OF THE DRAWINGS

Fig. 1A illustrates a configuration of a light guide according to a first embodiment.
Fig. 1B illustrates a configuration of a light entrance section and a boundary section.
Fig. 1C illustrates a light focus principle implemented by a reflective surface of a light collecting element.
Fig. 2 illustrates collection of light input to the light guide by the light entrance section, guidance of the light by the light guiding section, and leakage of the light from the light entrance section.
Fig. 3A illustrates an arrangement of the light guide and angles of incidence of the light.
Fig. 3B illustrates light extraction efficiency as a function of the angles of incidence illustrated in Fig. 3A.
Fig. 4 illustrates a first manufacturing method flow of the light guide.
Fig. 5A illustrates a mold used in a first manufacturing method and a state of an inside of the mold after an insert setting step in a front view, or a view across a cross-section along a reference line AA in Fig. 5B.
Fig. 5B illustrates the mold used in the first manufacturing method and the state of the inside of the mold after the insert setting step in a side view, or a view across a cross-section along a reference line BB in Fig. 5A.
Fig. 5C illustrates a flow of a resin in a molding step of the first manufacturing method.
Fig. 5D illustrates an insert being extracted in an insert extraction step of the first manufacturing method.
Fig. 6 illustrates a second manufacturing method flow of the light guide.
Fig. 7A illustrates a state of an inside of a mold after a first mold setting step of the second manufacturing method in a front view.
Fig. 7B illustrates a configuration of the light entrance section molded by a light entrance section molding step of the second manufacturing method using a first mold.
Fig. 7C illustrates a configuration of a bottom surface of the light entrance section and a continuous section.
Fig. 7D illustrates a second mold used in the second manufacturing method and a state of an inside of the mold after an insert setting step in a front view.
Fig. 7E illustrates the second mold used in the second manufacturing method and the state of the inside of the mold after the insert setting step in a perspective view.
Fig. 8 illustrates a third manufacturing method flow of the light guide.
Fig. 9A illustrates a configuration of the light entrance section molded by a light entrance section molding step of the third manufacturing method.
Fig. 9B illustrates a configuration of the light guiding section molded by a light guiding section molding step of the third manufacturing method.
Fig. 9C illustrates the light entrance section and the light guiding section welded by a welding step of the third manufacturing method.
Fig. 9D illustrates a state of a boundary, or a continuous section and a non-continuous section, between the light entrance section and the light guiding section welded by the welding step of the third manufacturing method.
Fig. 10 illustrates a configuration of a light guide according to a first variant.
Fig. 11 illustrates collection of the light input to the light guide according to the first variant by the light entrance section, guidance of the light by the light guiding section and leakage of the light from the light entrance section.
Fig. 12A illustrates a configuration of a light guide according to a second embodiment.
Fig. 12B illustrates a configuration of a light returning section and a boundary section.
Fig. 13 illustrates a light returning principle implemented by the light returning section.
Fig. 14 illustrates a light guiding principle implemented by the light guiding section.
Fig. 15 illustrates a fourth manufacturing method flow of the light guide.
Fig. 16A illustrates a configuration of the light entrance section molded by a light entrance section molding step of a fourth manufacturing method.
Fig. 16B illustrates a configuration of the light guiding section molded by a light guiding section molding step of the fourth manufacturing method.
Fig. 16C illustrates a configuration of the light returning section molded by a light returning section molding step of the fourth manufacturing method.
Fig. 16D illustrates the light entrance section, the light guiding section and the light returning section welded by a welding step of the fourth manufacturing method.
Fig. 17 illustrates a configuration of a light guide according to a second variant.
Fig. 18 illustrates a configuration of a light guide according to a third variant.
Fig. 19A illustrates a configuration of a light guide according to a third embodiment.
Fig. 19B illustrates a configuration of the light entrance section and the boundary section.
Fig. 20 illustrates collection of the light input to the light guide by the light entrance section and guidance of the light by the light guiding section.
Fig. 21 illustrates a light guide assembly according to the third embodiment.
Fig. 22 illustrates a principle of collection of the light input to the light guide assembly by the light entrance section and guidance of the light by the light guiding section.
Fig. 23 illustrates a configuration of a light guide assembly according to a variant and a light focus principle.

### DESCRIPTION OF EXEMPLARY EMBODIMENTS

Hereinafter, the invention will be described through embodiments of the present invention, but the following embodiments do not limit the invention according to claims. In addition, not all of the combinations of features described in the embodiments are essential to the solutions of the invention.

### <<First Embodiment>>

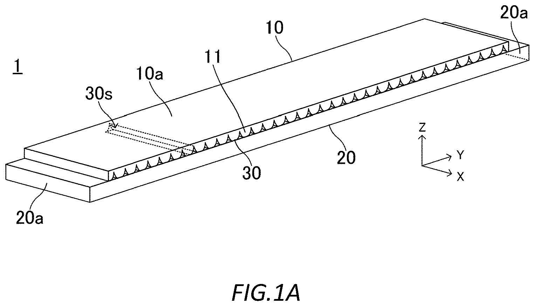

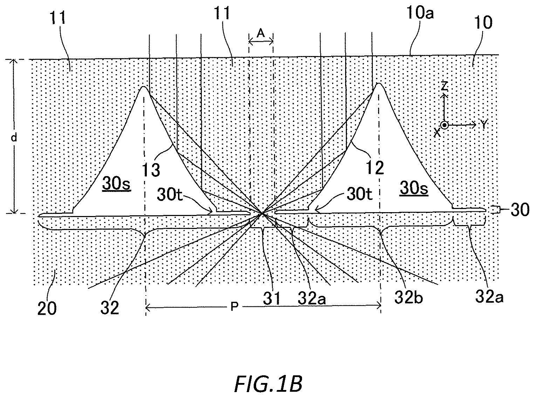

Fig. 1A and Fig. 1B respectively illustrate an overall configuration of a light guide 1 according to a first embodiment, and a configuration of a light entrance section 10 and a boundary section 30 between the light entrance section 10 and a light guiding section 20. The light guide 1 is an optical device which efficiently collects light input from a light entrance surface 10a and guides the collected light to a light exit surface 20a, which is different from the light entrance surface 10a, so that the light is output without leakage or with low leakage, and includes the light entrance section 10, the light guiding section 20 and the boundary section 30. The light guide 1 generally has a substantially plate-like shape which bidimensionally expands in an X-axis direction as a transverse direction and a Y-axis direction as a longitudinal axis and has a thickness in a Z-axis direction.

The light entrance section 10 is an optical member which collects light input in an input direction, or a -Z direction in the present embodiment, via the light entrance surface 10a, and has a plurality of light collecting elements 11. The plurality of light collecting elements 11 are columnar members each of which has a cross-section having an inverted substantially isosceles trapezoidal shape with a maximum width P in the Y-axis direction and a height d in the Z-axis direction and extends in the X-axis direction, and are arrayed in parallel in the Y-axis direction so that +Z sides of Y side surfaces, or a +Y side surface and a -Y side surface are in contact with one another and -Z sides are spaced apart from one another. In the present embodiment, the plurality of light collecting elements 11 are integrally molded to be connected to one another, while the light entrance section 10 is described to include the plurality of light collecting elements 11 for convenience of description of the configuration and functionality of the light entrance section 10. As a result, the light entrance section 10 extends in the Y-axis direction and +Z surfaces of the plurality of light collecting elements 11 are connected to one another to form the light entrance surface 10a having a planar shape with a width in the X-axis direction. In this manner, the light entrance surface 10a is provided so that the light is input from a +Z side. Two of the light collecting elements 11 adjacent to one another form a hollow space therebetween, which will be simply referred to as a space, 30s which has a cross-section having a substantially isosceles triangular shape and extends in the X-axis direction.

The plurality of light collecting elements 11 may be arrayed in parallel to be spaced apart from one another in the Y-axis direction. In such a case, each of the +Z surfaces of the plurality of light collecting elements 11 serves as an independent light entrance surface.

Each of the light collecting elements 11 can be formed by using, for example, a resin having a high refractive index such as an acrylic resin (refractive index: 1.49) and a polycarbonate resin (refractive index: 1.58), or, alternatively, glass (refractive index: 1.51 to 1.53 for BK7, for example). As a result, a boundary between each of the light collecting elements 11 and the space 30s, or each of the ±Y side surfaces of each of the light collecting elements 11, serves as reflective surfaces 12, 13 which reflect the light input into the light collecting elements 11 via the light entrance surface 10a. The light is totally reflected when the light enters from an inside of each of the light collecting elements 11 to the ±Y side surfaces at an angle equal to or greater than a critical angle. The critical angle is approximately 42 degrees for the acrylic resin, approximately 41 degrees for the polycarbonate resin, and approximately 42 degrees for the glass. Thus, the ±Y side surfaces of each of the light collecting elements 11 are formed so that each of their normals forms an angle equal to or greater than the critical angle with the input direction of the light, or the Z-axis direction in the present embodiment.

The reflective surfaces 12, 13 are arranged to be opposed to one another and provided to reflect and collect the light input from the light entrance surface 10a toward a continuous section 31. Here, in order to increase reflectance, the reflective surfaces 12, 13, or the ±Y side surfaces of the light collecting elements 11, may be mirror-finished. A reflective film may be provided by using, for example, metal.

The light guiding section 20 is an optical member in which light is arranged on a side with the light exit surface 20a, or a -Z side, opposite to the light entrance surface 10a of the light entrance section 10 and which guides the light in a +Y direction and/or a -Y direction so that the light is output from the light exit surface 20a. The light guiding section 20 is formed to have a plate-like shape which extends in the Y-axis direction. Here, a width of the light guiding section 20 in the X-axis direction is equal to, or may be larger than, a width of the light entrance section 10, a length of the light guiding section 20 in the Y-axis direction is larger than, or may be equal to, a length of the light entrance section 10, and a thickness of the light guiding section 20 in the Z-axis direction is larger than a thickness of the light entrance section 10 or may be arbitrarily determined. A +Y side surface and/or a -Y side surface of the light guiding section 20 form the light exit surface 20a through which the light is output and a +Z end and a -Z end are each formed to have a planar shape so that they serve as reflective surfaces which reflect the light guided into the light guiding section 20 toward an inside.

The light guiding section 20 can be formed of a same material as the light collecting elements 11. In order to increase the reflectance, the +Z end and the -Z end of the light guiding section 20 may be mirror-finished. A reflective film may be provided by using, for example, metal.

On a light guide path for light from the light entrance surface 10a of the light entrance section 10 to the light exit surface 20a of the light guiding section 20, the light entrance section 10 is arranged closer to the light entrance surface 10a than the light guiding section 20 and the light guiding section 20 is arranged closer to the light exit surface 20a than the light entrance section 10.

The boundary section 30 is positioned at a boundary between the light entrance section 10 and the light guiding section 20, and includes a continuous section 31 and a non-continuous section 32.

The continuous section 31 is provided to physically continuously connect the light entrance section 10 and the light guiding section 20 to guide the light reflected by the reflective surfaces 12, 13 of the light entrance section 10 into the light guiding section 20. In order to be able to guide the light from a wide range of angles, the continuous section 31 is formed in a plate-like shape which has a cross-section with a +Z end expanding in the Y-axis direction from the -Z end, or a minimum width in the Y-axis direction, in other words, an aperture width A, and extends in the X-axis direction, and is arranged at a middle part in the Y-axis direction on a -Z surface of each of the light collecting elements 11. The continuous section 31 can be formed of the same material as the light collecting elements 11.

The non-continuous section 32 is provided so that the light entrance section 10 and the light guiding section 20 are spaced apart from one another, and is arranged adjacent to each of the ±Y sides of the continuous section 31. The non-continuous section 32 includes a first non-continuous section 32a in which a separation distance between the light entrance section 10 and the light guiding section 20 is constant along the Y-axis direction and a second non-continuous section 32b in which a separation distance between the light entrance section 10 and the light guiding section 20 is inconstant, in other words, not constant and varies, along the Y-axis direction. In the present example, the first non-continuous section 32a section is arranged at ±Y ends of the non-continuous section 32 and the second non-continuous section 32b is arranged between two first non-continuous sections 32a, each being the first non-continuous section 32a. Here, a back surface, or an opposite surface facing toward a side with the light guiding section 20, of each of the reflective surfaces 12, 13 is provided to constitute an end, on a side with the light entrance section 10, of the second non-continuous section 32b. Because the light guiding section 20 is spaced apart from the light entrance section 10, or a -Z surface or the reflective surfaces 12, 13 on the ±Y side surfaces, by the second non-continuous section 32b and the first non-continuous section 32a to form the space 30s therebetween and spaces 30t each extending from a -Z end of the space 30s in ±Y directions, the +Z end surface of the light guiding section 20 serves as a reflective surface which reflects the light, traveling from an inside of the light guiding section 20 to the light entrance section 10, in the -Z direction.

In the present embodiment, a plurality of continuous sections 31, each being the continuous section 31, and a plurality of non-continuous sections 32, each being the non-continuous section 32, are provided at the boundary between the light entrance section 10 and the light guiding section 20, and the plurality of continuous sections 31 and the plurality of non-continuous sections 32 are alternately arranged along the Y-axis direction. Here, the continuous sections 31 each having the aperture width A are cyclically arrayed with a pitch P in the Y-axis direction and further arranged so that a length of each of the continuous sections 31 is shorter than a length of each of the non-continuous sections 32, in other words, an aperture ratio A/P is small. As a result, the light guided within the light guiding section 20 is returned into the light guiding section 20 by being reflected by the +Z end surface where the non-continuous sections 32 are positioned, so that leakage of the light to the light entrance section 10 and then to an outside of the light guide 1 via the continuous section 31 can be reduced.

As illustrated in Fig. 1B, the reflective surfaces 12, 13 of the light entrance section 10 reflect the light input from the light entrance surface 10a toward the continuous section 31. In particular, the reflective surfaces 12, 13 are formed to reflect the light input from a direction orthogonal to the light entrance surface 10a, or the Z-axis direction in the present embodiment, toward the continuous section 31.

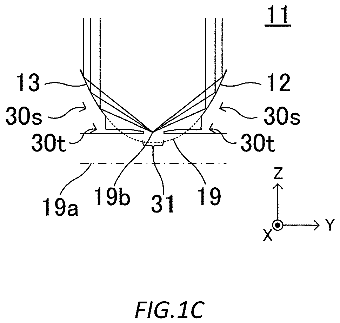

Fig. 1C illustrates a light focus principle implemented by the reflective surfaces 12, 13 of one of the light collecting elements 11. The reflective surfaces 12, 13 are formed to be curved or bent on a YZ cross-section to be more largely inclined with respect to the input direction of the light, or the Z-axis direction, on the -Z side than on the +Z side. The reflective surfaces 12, 13 may be continuously curved from the +Z side toward the -Z side. Here, the reflective surfaces 12, 13 each form a part of a parabola 19 determined by a directrix 19a parallel to the Y-axis and positioned on the -Z side with respect to the continuous section 31 and a focal point 19b positioned at a center of the continuous section 31 on the YZ cross-section. As a result, the light input from the light entrance surface 10a in the -Z direction and entering on the +Z side of the reflective surfaces 12, 13 is reflected at a relatively large angle of incidence, which is an angle formed by a normal of each of the reflective surfaces and the input direction, the light entering at a middle part is reflected at a medium angle of incidence, and the light entering on the -Z side is reflected at a relatively small angle of incidence, so that the light is collected toward the center of the continuous section 31.

The reflective surfaces 12, 13 may be bent in a way that a plurality of straight lines are continuously connected. Here, the reflective surfaces 12, 13 each approximately form a part of the parabola 19 on the YZ cross-section. In this case, a length and inclination of each of the straight lines may be determined so that collimated light reflected from a straight surface including one straight line passes through the continuous section 31 while expanding in a whole range or a wide range of the continuous section 31 in the Y-axis direction. As a result, the light entering on the +Z side of the reflective surfaces 12, 13 is reflected at a relatively large angle of incidence, which is an angle formed by the normal of each of the reflective surfaces and the input direction, and light entering at the middle part is reflected at a medium angle of incidence, and light entering on the -Z side is reflected at a relatively small angle of incidence, so that the light is collected toward the continuous section 31.

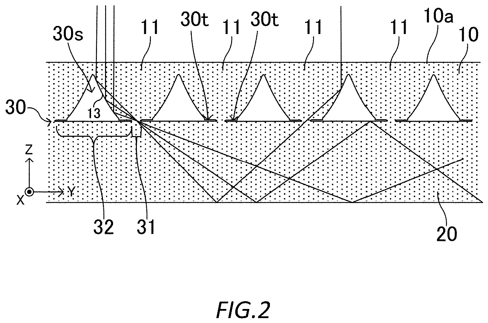

Fig. 2 illustrates collection of the light input to the light guide 1 by the light entrance section 10, guidance of the light by the light guiding section 20 and leakage of the light from the light entrance section 10. Because the width A of the continuous section 31 in the Y-axis direction is small as described above, the light collected to the continuous section 31 and then entering the light guiding section 20 via the continuous section 31 expands within the light guiding section 20. The light reflected on the +Z side of the reflective surface 13 and entering the light guiding section 20 via the continuous section 31 enters the ±Z end surfaces of the light guiding section 20 with a relatively large inclination and is guided within the light guiding section 20 in the +Y direction while being reflected a relatively great number of times. The light reflected on the -Z side of the reflective surface 13 and entering the light guiding section 20 via the continuous section 31 enters the ±Z end surfaces of the light guiding section 20 with a small inclination and is guided, while being reflected a relatively small number of times, within the light guiding section 20 in the +Y direction. Therefore, the light entering the reflective surface 13 is reflected by the ±Z end surfaces and guided in the +Y direction while generally expanding in a wide range of angles. Here, the light may return to the light entrance section 10 via the continuous section 31 different from the continuous section 31 through which the light passed when entering the light guiding section 20 and then leak to an outside of the light guide 1. However, leakage of the light is reduced because the aperture ratio A/P is small.

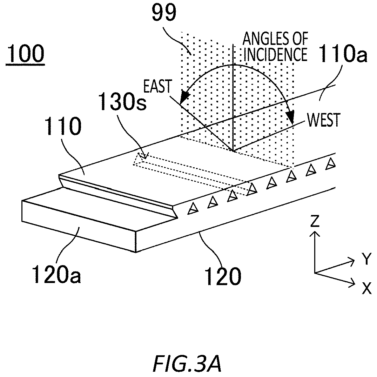

Fig. 3A illustrates an arrangement of the light guide 1 and angles of incidence of the light. The light guide 1 is arranged so that an extending direction of the continuous section 31, or the X-axis direction, is substantially parallel to a plane including a trajectory of the sun, or the trajectory plane, 99 and so that a normal direction of the light entrance surface 10a is substantially parallel to the trajectory plane 99, in other words, the light collecting elements 11 are oriented to be substantially parallel to the trajectory plane 99. The angles of incidence of the light are determined with reference to the normal direction of the light entrance surface 10a. Here, the trajectory plane 99 of the sun is formed by a trajectory of an orbital motion of the sun.

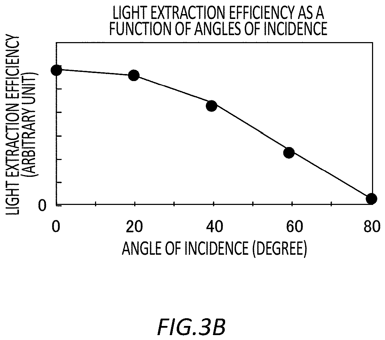

Fig. 3B illustrates light extraction efficiency by the light guide 1 as a function of the angles of incidence illustrated in Fig. 3A. The extraction efficiency can be analyzed by a so-called ray simulation and is calculated by dividing an amount of the light output from the light exit surface 20a by an amount of the light input to the light entrance surface 10a. When an angle of incidence is zero, in other words, the light vertically enters the light entrance surface 10a, a large part of the light entering the light entrance section 10 via the light entrance surface 10a is guided within the light guiding section 20 so that the light is output from the light exit surface 20a. However, the extraction efficiency gradually decreases as the angle of incidence increases above 20 degrees, and is almost zero when the angle of incidence is 80 degrees. It can be seen that the high extraction efficiency can be obtained at least in a range of the angles of incidence of 0 degrees to 40 degrees, in other words, for a long period of time in hours of sunlight.

The inclination of the light guide 1 may be adjusted according to the noon sun angle, for example, the inclination of the light guide 1 may be adjusted a plurality of times in a year so that the extending direction of the continuous section 31 and the normal direction of the light entrance surface 10a is substantially parallel to the trajectory plane 99 of the sun.

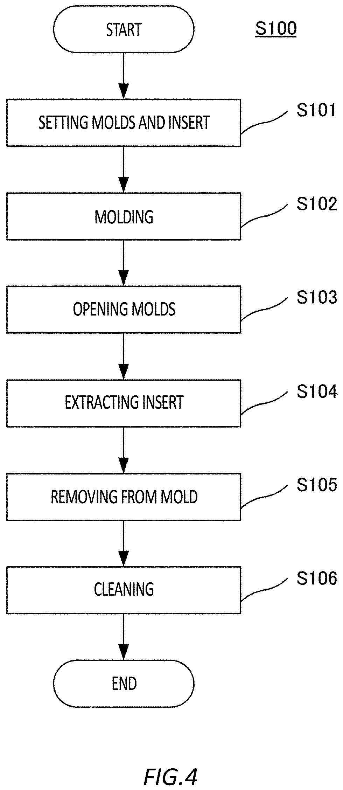

Fig. 4 illustrates a first manufacturing method flow S100 of the light guide 1. In the present embodiment, as an example, the acrylic resin is used as a molding material of the light guide 1. In other words, the light entrance section 10 and the light guiding section 20 are formed of a same material.

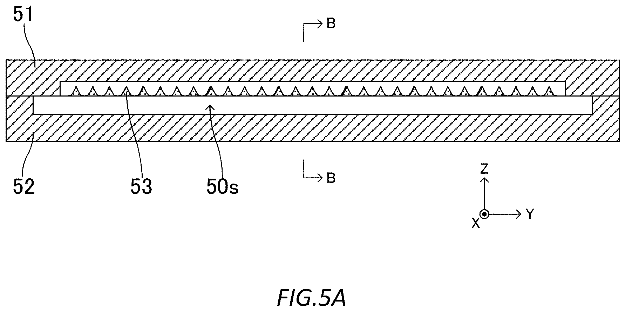

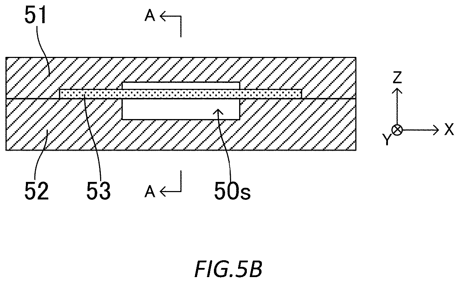

In Step S101, molds 51, 52 and a plurality of inserts 53 are set. Fig. 5A and Fig. 5B respectively illustrate a state of an inside of the molds 51, 52 in a front view along the reference line AA in Fig. 5B and in a side view along the reference line BB in Fig. 5A. The mold 51 is a metal mold for forming the light entrance section 10 and includes an internal space having a size and shape which can accommodate the light entrance section 10 and the plurality of inserts 53. The mold 52 is a metal mold for forming the light guiding section 20 and includes an internal space having a size and shape which can accommodate the light guiding section 20. Each of the plurality of inserts 53 is a metal mold for forming the spaces 30s, 30t in the light entrance section 10, or between the plurality of light collecting elements 11, and is a solid columnar body which has a cross-sectional shape including a substantially isosceles triangular shape and convex portions each laterally extending from a bottom side of the substantially isosceles triangular shape.

The mold 52 is arranged with the internal space of the mold 52 being oriented in the +Z direction, the plurality of inserts 53 are arranged side by side in the Y-axis direction on the mold 52 so as to extend across the internal space of the mold 52 in the X-axis direction, and the mold 51 is laid on the mold 52 with the internal space of the mold 51 being oriented in the -Z direction. As a result, an internal space 50s, which is vertically divided by the plurality of inserts 53 except for some part, is formed between the molds 51, 52.

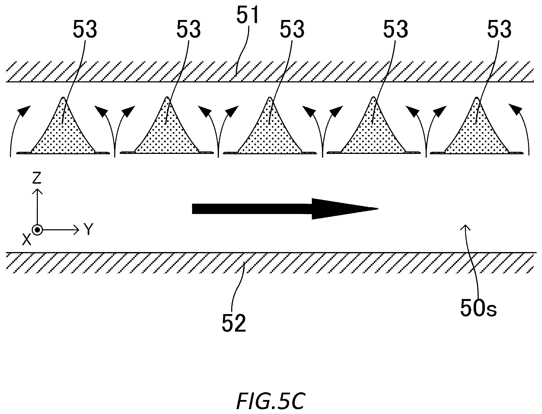

In Step S102, the light guide 1 is molded by injecting the acrylic resin into the molds 51, 52. Fig. 5C illustrates a flow of the resin within the molds 51, 52. The resin is injected into a lower part of the internal space 50s via a through hole, not shown, of the mold 52 and is loaded into an upper part via a gap between the plurality of inserts 53 while being loaded in a direction of a black arrow. When the resin is cooled after a certain period of time, the process proceeds to a next step.

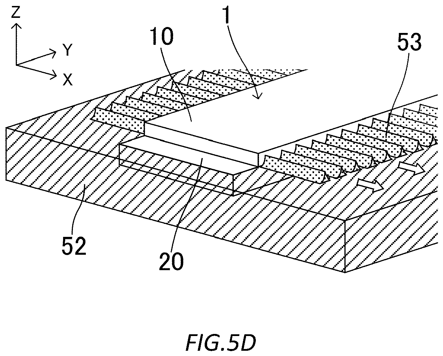

In Step S103, the mold is opened by pulling the mold 51 in the +Z direction. As a result, as illustrated in Fig. 5D, the light entrance section 10 is exposed on the mold 52 with the light guiding section 20 fitted into the internal space of the mold 52.

In Step S104, the plurality of inserts 53 are extracted. Fig. 5D illustrates the plurality of inserts 53 being extracted from the light guide 1. The plurality of inserts 53 are extracted in a direction of a white arrow, or the +X direction. In order to facilitate extraction from the light guide 1, the plurality of inserts 53 may be formed in a tapered shape in which a +X end is thinner than a -X end.

In Step S105, the light guide 1 is removed from the mold 52. As a result, the light guide 1 illustrated in Fig. 1A is obtained.

In Step S106, the molds 51, 52 and the plurality of inserts 53 are cleaned. Then, the flow ends. A plurality of light guides 1 can be manufactured by repeating Steps S101 to S106.

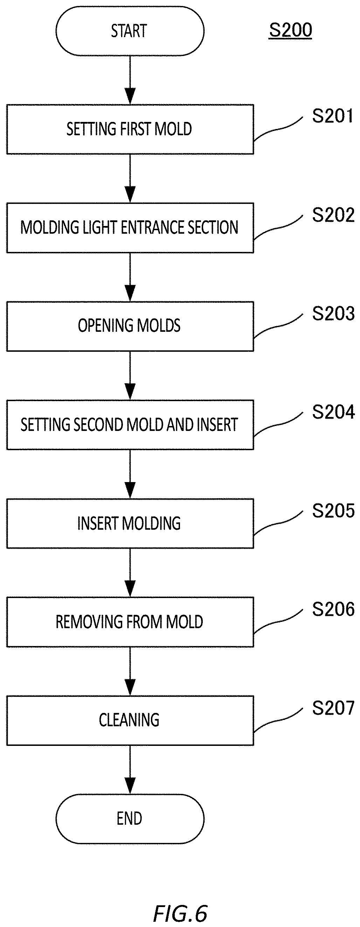

Fig. 6 illustrates a second manufacturing method flow S200 of the light guide 1. In the present embodiment, as an example, the acrylic resin is used as the molding material of the light guide 1. In other words, the light entrance section 10 and the light guiding section 20 are formed of the same material.

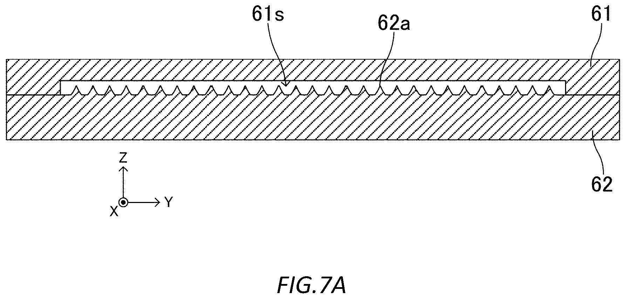

In Step S201, molds 61, 62 are set. Fig. 7A illustrates a state of an inside of the molds 61, 62 in a front view, or when viewed in the X-axis direction. The molds 61, 62 are a pair of metal molds for forming the light entrance section 10. The mold 61 includes an internal space having a size and shape which can accommodate the light entrance section 10. The mold 62 has a plurality of protrusions 62a which protrude from an upper surface in the +Z direction and which are arranged side by side in the Y-axis direction. Each of the plurality of protrusions 62a is a structure for forming the spaces 30s, 30t in the light entrance section 10, or between the plurality of light collecting elements 11, and is formed to have a cross-sectional shape including a substantially isosceles triangular shape and convex portions each laterally extending from a bottom side of the substantially isosceles triangular shape and to extend in the X-axis direction.

The mold 62 is arranged with the plurality of protrusions 62a being oriented in the +Z direction, and the mold 61 is laid on the mold 62 with the internal space of the mold 61 being oriented in the -Z direction to accommodate the protrusion 62a. As a result, an internal space 61s is formed between the molds 61, 62.

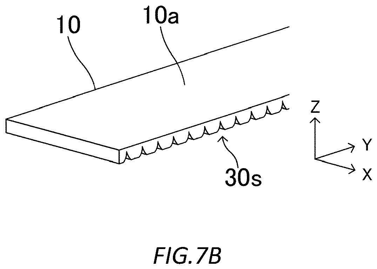

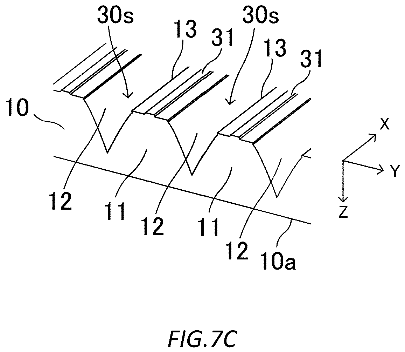

In Step S202, the light entrance section 10 is molded by injecting the acrylic resin into the molds 61, 62. Fig. 7B and Fig. 7C respectively illustrate an overall configuration of the light entrance section 10 molded and a structure on the -Z side. The light entrance section 10 is integrally molded so that the plurality of light collecting elements 11 are arrayed in parallel in the Y-axis direction as described above and the space 30s is included between the light collecting elements 11 adjacent to one another. The continuous section 31 is formed at the middle part in the Y-axis direction on the -Z surface of each of the light collecting elements 11 to protrude from the -Z surface of each of the light collecting elements 11 in the -Z direction and extend in the X-axis direction. In other words, in the present example, the continuous section 31 is integrally molded with the light entrance section 10. A detailed configuration of the continuous section 31 is as described above.

In Step S203, the mold 61 is opened from the mold 62. In this state, the light entrance section 10 is accommodated in the mold 61.

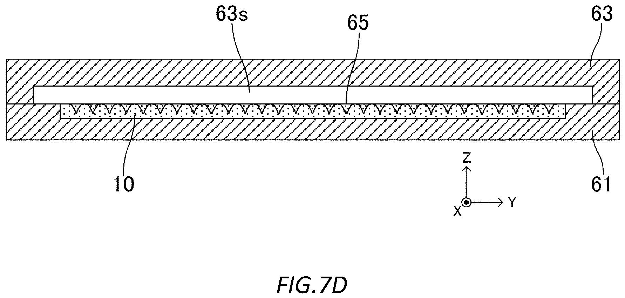

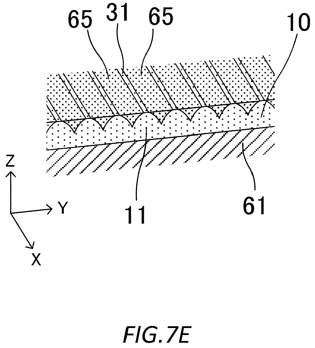

In Step S204, the mold 61 and a mold 63, and a plurality of inserts 65 are set. Fig. 7D and Fig. 7E respectively illustrate a state of an inside of the molds 61, 63 in a front view, or when viewed in the X-axis direction, and in a perspective view. The mold 63 has a similar configuration to that of the mold 52 described above. The plurality of inserts 65 each have a similar configuration to that of each of the inserts 53 described above. However, the length is equal to the width of the light entrance section 10 in the X-axis direction.

The mold 61 in which the light entrance section 10 is accommodated is vertically inverted, the inserts 65 are respectively inserted into a plurality of spaces 30s, each being the space 30s, of the light entrance section 10, and the mold 63 is laid on the mold 61 with the internal space of the mold 63 being oriented in the -Z direction. As a result, the light entrance section 10 in which the plurality of inserts 65 are respectively fitted into the spaces 30s is accommodated in the internal space of the mold 61, so that an internal space 63s is formed between the mold 61 and the mold 63.

In Step S205, the light guide 1 is molded by insert molding by injecting the acrylic resin into the molds 61, 63. The resin is injected into the internal space 63s via a through hole, not shown, of the mold 63 and is loaded onto the +Z side of the light entrance section 10. When the resin is cooled after a certain period of time, the resin forms the light guiding section 20 and is integrated with the light entrance section 10 via the continuous section 31 (see Fig. 7C).

In Step S206, the light guide 1 is removed from the molds 61, 63 and the plurality of inserts 65 are extracted from the light guide 1. In order to facilitate extraction from the light guide 1, the plurality of inserts 53 may be formed in a tapered shape in which a +X end is thinner than a -X end. As a result, the light guide 1 illustrated in Fig. 1A is obtained.

In Step S207, the molds 61, 62, 63 and the plurality of inserts 65 are cleaned. As a result, the flow ends. A plurality of light guides 1 can be manufactured by repeating Steps S201 to S207.

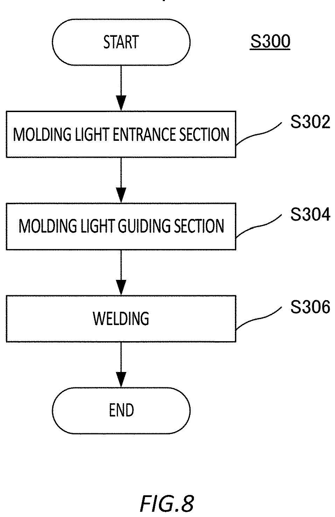

Fig. 8 illustrates a third manufacturing method flow S300 of the light guide 1. In the present embodiment, as an example, the acrylic resin is used as the molding material of the light guide 1. In other words, the light entrance section 10 and the light guiding section 20 are formed of the same material.

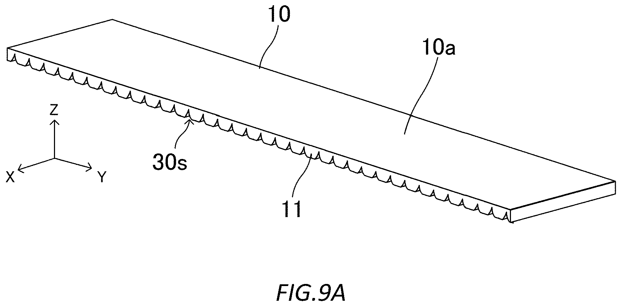

In Step S302, the light entrance section 10 is molded. The light entrance section 10 can be molded by Steps S201 to S203 described above. Fig. 9A illustrates a configuration of the light entrance section 10 molded. The light entrance section 10 is formed as a body separate from the light guiding section 20.

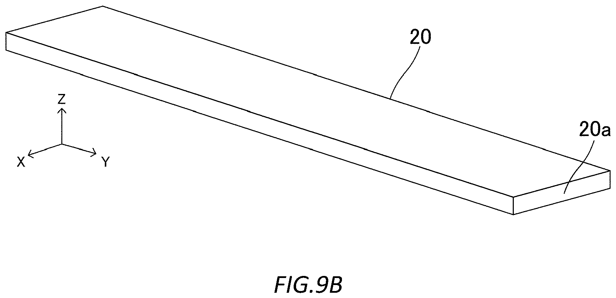

In Step S304, the light guiding section 20 is molded. A detail of molding will be omitted. Fig. 9B illustrates a configuration of the light guiding section 20 molded. The light guiding section 20 is formed as a body separate from the light entrance section 10.

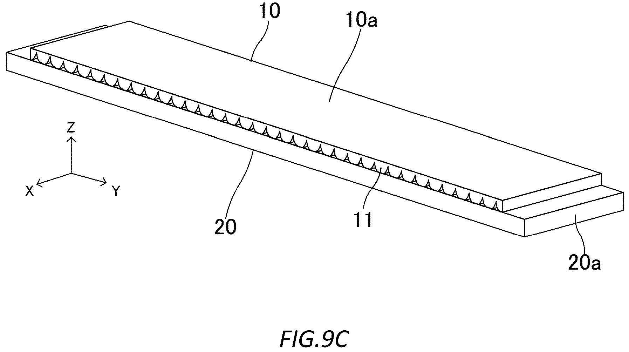

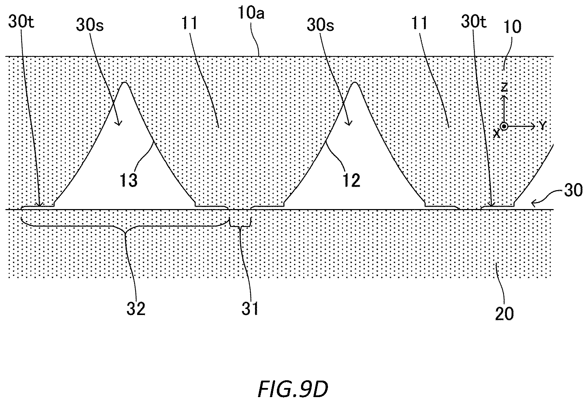

In Step S306, the light guide 1 is formed by welding the light entrance section 10 and the light guiding section 20. As illustrated in Fig. 9C, the light entrance section 10 is arranged on the +Z end surface of the light guiding section 20 so that one end surface of the light entrance section 10 where the spaces 30s are formed is oriented to the -Z side. Thus, as illustrated in Fig. 9D, the continuous section 31 integrally molded on the -Z surface of the light entrance section 10 abuts the +Z end surface of the light guiding section 20. In this state, the light entrance section 10 and/or the light guiding section 20 are welded to one another by applying ultrasonic vibration to them. As a result, the light entrance section 10 and the light guiding section 20 are joined to one another via the continuous section 31 to form the light guide 1.

Without being limited to welding, the light entrance section 10 and the light guiding section 20 may be bonded using, for example, a solvent. The light guide 1 may be molded using a 3D printer.

The light guide 1 according to the first embodiment is an optical device which guides the light input from the light entrance surface 10a to the light exit surface 20a, which is different from the light entrance surface 10a, so that the light is output from the light exit surface 20a, and includes: the light entrance section 10 having the light entrance surface 10a in which the light is input in the Z-axis direction; the light guiding section 20 which is arranged closer to the light exit surface 20a and which guides the light in the Y-axis direction so that the light is output from the light exit surface 20a; and the continuous section 31 and the non-continuous section 32 each arranged at the boundary between the light entrance section 10 and the light guiding section 20, the continuous section 31 being provided so that the light entrance section 10 and the light guiding section 20 are continuously connected and the non-continuous section 32 being provided so that the light entrance section 10 and the light guiding section 20 are spaced apart from one another. According to the above, the light collected by the light entrance section 10 can be output from the light exit surface 20a almost without leaking, by causing the light, which is input to the light entrance section 10 in the Z-axis direction via the light entrance surface 10a, to enter the light guiding section 20 via the continuous section 31 arranged at the boundary between the light entrance section 10 and the light guiding section 20 to continuously connect them and guiding the light within the light guiding section 20 in the Y-axis direction. Leakage of the light from the light guiding section 20 to the light entrance section 10 via the continuous section 31 can be reduced by structurally dividing the light guide 1 into two sections consisting of the light entrance section 10 which collects the light and the light guiding section 20 which guides the light and continuously connecting the light entrance section 10 to the light guiding section 20 via the continuous section 31 having a width smaller than the non-continuous section 32.

While a pair of the reflective surfaces 12, 13 are provided to be opposed to the ±Y side surfaces of one of the light collecting elements 11 in light guide 1 according to the first embodiment, a reflective surface may be, without being limited to the above, provided on only one of the ±Y side surfaces.

The light output from the light exit surface 20a of the light guide 1 may be input to another light guide, such as an optic fiber, which is different from the light guide 1 so that the light is output, or emitted, at another end of the another light guide.

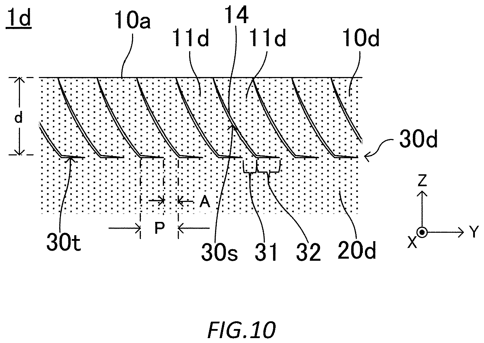

Fig. 10 illustrates a configuration of a light guide 1d according to a first variant, in particular, a detailed configuration of a light entrance section 10d and a boundary section 30d between the light entrance section 10d and a light guiding section 20d. The light guide 1d includes the light entrance section 10d, the light guiding section 20d, and the boundary section 30d.

Similarly to the light entrance section 10 described above, the light entrance section 10d is an optical member which collects the light input in the input direction, or the -Z direction in the present example, via the light entrance surface 10a, and has a plurality of light collecting elements 11d. The plurality of light collecting elements 11d are columnar members each of which has a cross-section having a substantially parallelogram shape with a width P in the Y-axis direction and a height d in the Z-axis direction and extends in the X-axis direction, and are arrayed in parallel in the Y-axis direction with +Z ends being in contact with one another and ±Y inclined surfaces being spaced apart from one another. In the present example, the plurality of light collecting elements 11d are integrally molded to be connected to one another. As a result, the light entrance section 10d extends in XY directions and +Z surfaces of the plurality of light collecting elements 11d are connected to one another to form the light entrance surface 10a having a planar shape expanding in the XY directions. Two of the light collecting elements 11d adjacent to one another form a space 30s therebetween which extends in the +Y, -Z directions and extends in the X-axis direction.

The plurality of light collecting elements 11d may be arrayed in parallel to be spaced apart from one another in the Y-axis direction. In such a case, each of the +Z surfaces of the plurality of light collecting elements 11d serves as an independent light entrance surface.

The light collecting elements 11d can be formed by using the resin having the high refractive index or, alternatively, the glass, as described above. As a result, a boundary between each of the light collecting elements 11d and the space 30s, or a -Y inclined surface of each of the light collecting elements 11, serves as a reflective surface 14 which reflects the light input into the light collecting elements 11d via the light entrance surface 10a. The light is totally reflected when the light enters from an inside of each of the light collecting elements 11d to the -Y side surface at an angle equal to or greater than a critical angle. Thus, the -Y side surface of each of the light collecting elements 11d is formed so that its normal forms an angle equal to or greater than the critical angle with the input direction of the light, or the Z-axis direction in the present example.

The reflective surface 14 reflects the light input from the light entrance surface 10a to be collected toward the continuous section 31. Here, in order to increase the reflectance, the reflective surface 14, or the -Y side surface of each of the light collecting elements 11d, may be mirror-finished. A reflective film may be provided by using, for example, metal.

The light guiding section 20d has a similar configuration to that of the light guiding section 20 described above.

The boundary section 30d is positioned at a boundary between the light entrance section 10d and the light guiding section 20d, and includes the continuous section 31 and the non-continuous section 32.

The continuous section 31 physically continuously connects the light entrance section 10d and the light guiding section 20d, and guides the light reflected by the reflective surface 14 of the light entrance section 10d into the light guiding section 20d. The continuous section 31 is formed in a plate-like shape having a width in the Y-axis direction, or the aperture width A, and extending in the X-axis direction, and is arranged on the +Y side on the -Z surface of each of the light collecting elements 11. The continuous section 31 can be formed of a same material as the light collecting elements 11.

The non-continuous section 32 is provided so that the light entrance section 10d and the light guiding section 20d are spaced apart from one another, and is arranged adjacent to the -Y side of the continuous section 31. Because the light guiding section 20d is spaced apart from the light entrance section 10d, or the -Z surface, by the non-continuous section 32 to form the space 30t therebetween which extends from the -Z end of the space 30s in the +Y direction, the +Z end surface of the light guiding section 20d serves as a reflective surface which reflects the light, traveling from an inside of the light guiding section 20d toward the light entrance section 10d, in the -Z direction.

In the present variant, continuous sections 31, each being the continuous section 31, and non-continuous sections 32, each being the non-continuous section 32, are alternately arranged at the boundary between the light entrance section 10d and the light guiding section 20d in the Y-axis direction. Here, the continuous sections 31 each having an aperture width A are cyclically arrayed with a pitch P in the Y-axis direction and further arranged so that each of the continuous sections 31 is shorter than each of the non-continuous sections 32, in other words, an aperture ratio A/P is small. As a result, the light guided within the light guiding section 20d is returned into the light guiding section 20 by being reflected by the +Z end surface where the non-continuous sections 32 are positioned, so that leakage of the light to the light entrance section 10d and then to an outside of the light guide 1d via the continuous section 31 can be reduced.

The reflective surface 14 of the light entrance section 10d reflects the light input from the light entrance surface 10a toward the continuous section 31. In particular, the reflective surface 14 is formed to reflect the light input from a direction orthogonal to the light entrance surface 10a, or the Z-axis direction in the present example, toward the continuous section 31. The reflective surface 14 can be formed similarly to the reflective surfaces 12, 13 described above. As a result, the light entering on the +Z side of the reflective surfaces 14 is reflected at a relatively large angle of incidence, which is an angle formed by a normal of the reflective surface and the input direction, the light entering at the middle part is reflected at a medium angle of incidence, and the light entering on the -Z side is reflected at a relatively small angle of incidence, so that the light is collected toward the continuous section 31.

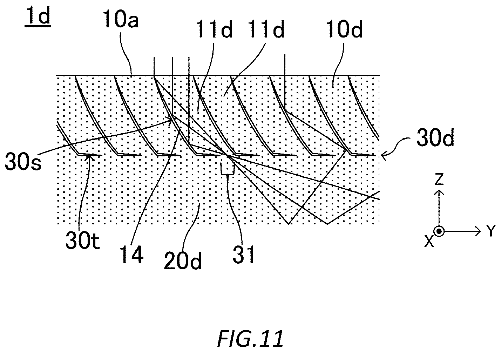

Fig. 11 illustrates collection of the light input to the light guide 1d by the light entrance section 10d, guidance of the light by the light guiding section 20d and leakage of the light from the light entrance section 10d. Because the width A of the continuous section 31 in the Y-axis direction is small as described above, the light collected to the continuous section 31 and then entering the light guiding section 20d via the continuous section 31 expands within the light guiding section 20d. The light reflected on the +Z side of the reflective surface 14 and entering the light guiding section 20d via the continuous section 31 enters the ±Z end surfaces of the light guiding section 20d with a relatively large inclination and is guided, while being reflected a relatively great number of times, within the light guiding section 20d in the +Y direction. The light reflected on the -Z side of the reflective surface 14 and entering the light guiding section 20d via the continuous section 31 enters the ±Z end surfaces of the light guiding section 20d with a small inclination and is guided, while being reflected a relatively small number of times, within the light guiding section 20d in the +Y direction. Therefore, the light entering the reflective surface 14 is reflected by the ±Z end surfaces and guided in the +Y direction while generally expanding in a wide range of angles. Here, the light may return to the light entrance section 10d via the continuous section 31 different from the continuous section 31 through which the light passed when entering the light guiding section 20d and then leak to an outside of the light guide 1d. However, leakage of the light is reduced because the aperture ratio A/P is small.

Also in the light guide 1d according to the first variant, the light collected by the light entrance section 10d can be output from the light exit surface 20a almost without leaking, by causing the light, which is input to the light entrance section 10d in the Z-axis direction via the light entrance surface 10a, to enter the light guiding section 20d via the continuous section 31 arranged at the boundary between the light entrance section 10d and the light guiding section 20d to continuously connect them and guiding the light within the light guiding section 20d in the Y-axis direction. Leakage of the light from the light guiding section 20d to the light entrance section 10d via the continuous section 31 can be reduced by structurally dividing the light guide 1 into two sections consisting of the light entrance section 10d which collects the light and the light guiding section 20d which guides the light and continuously connecting the light entrance section 10d to the light guiding section 20d via the continuous section 31 having a width smaller than the non-continuous section 32.

A cross-sectional shape is determined so that the -Z end surface of each of the plurality of light collecting elements 11d is positioned almost on the -Z side of the reflective surface 14 of adjacent one of the light collecting elements 11. As a result, the continuous section 31 and the non-continuous section 32 for one of the light collecting elements 11 are positioned almost on the -Z side of the reflective surface 14 of the adjacent one of the light collecting elements 11, and the reflective surfaces 14 of the plurality of light collecting elements 11d are sequentially arranged in the Y-axis direction when viewed in the input direction of the light, or the -Z direction in the present example. Therefore, most of the light input from the light entrance surface 10a in the -Z direction is reflected by the reflective surface 14 and guided to the light guiding section 20 via the continuous section 31.

An upper surface, or the light entrance surface 10a of the light entrance section 10 or 10d, and a lower surface, or the -Z surface of the light guiding section 20 or 20d, of each of the light guide 1 according to the first embodiment and the light guide 1d according to the variant may each be a smooth surface. As a result, deposition of, for example, dust can be prevented when the light guides 1, 1d is placed outdoors.

While, in the light guide 1 according to the first embodiment and the light guide 1d according to the variant, the light guiding section 20 or 20d is formed in a plate-like shape to extend in the Y-axis direction orthogonal to the input direction of the light, or the Z-axis direction the light guiding sections 20 or 20d may be, without being limited to the above, formed to be curved in any direction intersecting the input direction, for example, curved to have an arc shape or a spherical shell shape. The light guiding section 20 or 20d may be formed to extend to be curved or bent from a portion overlapping with the light entrance section 10 or 10d in any direction or may be formed to extend to the light exit surface 20a with an increasing width or a decreasing width, an increasing thickness or a decreasing thickness. As a result, the light collected by the light entrance section 10 is, after being guided into the light guiding section 20, guided toward the light exit surface 20a in any direction while being reflected by an end surface of the light guiding section 20.

### <<Second Embodiment>>

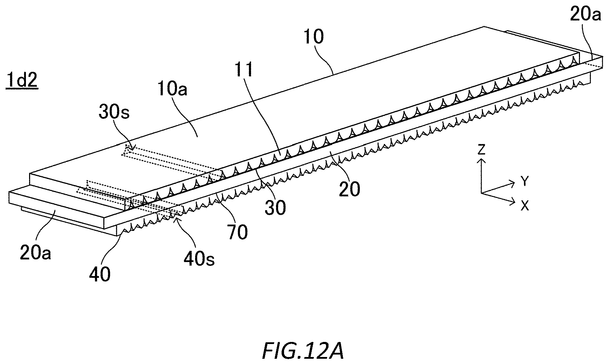

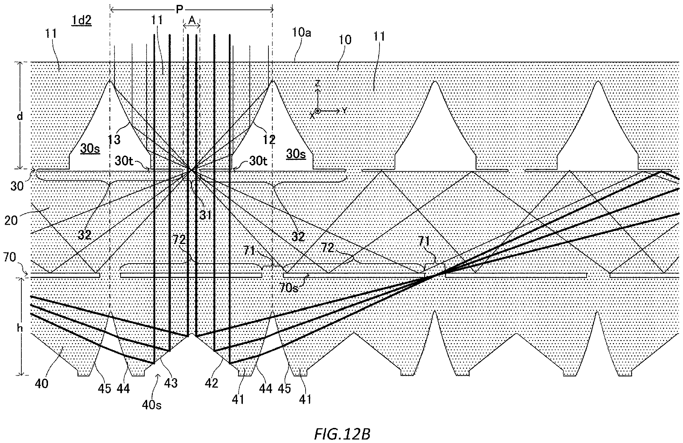

Fig. 12A and Fig. 12B respectively illustrate an overall configuration of a light guide 1d2 according to a second embodiment, and a configuration of a light returning section 40 and a boundary section 70 between the light returning section 40 and the light guiding section 20. The light guide 1d2 is an optical device which efficiently collects light input from a light entrance surface 10a and guides the collected light to a light exit surface 20a, which is different from the light entrance surface 10a, so that the light is output without leakage or with low leakage, and includes the light entrance section 10, the light guiding section 20, the boundary section 30, the light returning section 40 and the boundary section 70. The light guide 1d2 generally has a substantially plate-like shape which bidimensionally expands in the X-axis direction as a transverse direction and the Y-axis direction as a longitudinal axis and has a thickness in the Z-axis direction.

The light entrance section 10, the light guiding section 20 and the boundary section 30 each have a similar configuration to that of the light entrance section 10, the light guiding section 20 and the boundary section 30 of the light guide 1d2 according to the first embodiment.

The light returning section 40 is an example of a light collecting section which is arranged on a side opposite to the light entrance section 10 with reference to the light guiding section 20 in the Z-axis direction and which is provided so that the light which passed through the light guiding section 20 is input. The light returning section 40 is an optical member which returns passing-through light which passed through the light guiding section 20, or leaked light leaked from the light guiding section 20 to the -Z side, to the light guiding section 20, and has a plurality of light returning elements 41. The plurality of light returning elements 41 are columnar members each of which has a cross-section having an inverted substantially concave shape with a maximum width P in the Y-axis direction and a height h in the Z-axis direction and extends in the X-axis direction, and are arranged below, or on the -Z side of, the plurality of light collecting elements 11 and arrayed in parallel in the Y-axis direction so that the +Z sides of the Y side surfaces, or the +Y side surface and the -Y side surface, are in contact with one another and the -Z sides are spaced apart from one another. In the present embodiment, the plurality of light returning elements 41 are integrally molded to be connected to one another, while the light returning section 40 is described to include the plurality of light returning elements 41 for convenience of description of the configuration and functionality of the light returning section 40. As a result, the light returning section 40 extends in the XY directions and +Z surfaces of the plurality of light returning elements 41 are connected to one another to form a plane expanding in the XY directions. Aa hollow space, which will be simply referred to as a space, 40s which has a cross-section having a substantially isosceles triangular shape and extends in the X-axis direction is formed at a middle part of the -Z surfaces of the light returning elements 41 and a hollow space, which will be simply referred to as a space, 40t which has a cross-section having an isosceles triangular shape and extends in the X-axis direction is formed between two of the light collecting elements 11 adjacent to one another.

Similarly to the light collecting elements 11, the light returning elements 41 can be formed by using the resin having the high refractive index such as the acrylic resin (refractive index: 1.49) and the polycarbonate resin (refractive index: 1.58), or, alternatively, the glass (refractive index: 1.51 to 1.53 for BK7, for example). As a result, a boundary between each of the light returning elements 41 and the space 40s, in other words, inclined surfaces being opposed to one another and which are formed at the middle part of the light returning elements 41 serve as reflective surfaces 42, 43 which reflect light input from the light collecting elements 11 positioned immediately above, or on the +Z side of, the light returning elements 41 without being reflected by the reflective surfaces 12, 13 via a region therebetween and the light guiding section 20 to the light returning section 40. The light is totally reflected when the light enters from an inside of each of the light returning elements 41 to the reflective surfaces 42, 43 at an angle equal to or greater than a critical angle. The critical angle is approximately 42 degrees for the acrylic resin, approximately 41 degrees for the polycarbonate resin, and approximately 42 degrees for the glass. Thus, the inclined surfaces of each of the light returning element 41 are formed so that each of their normals forms an angle equal to or greater than the critical angle with the input direction of the light, or the Z-axis direction in the present embodiment.

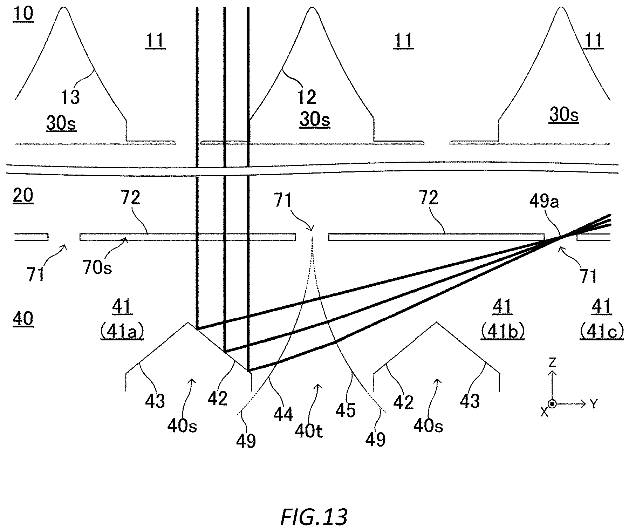

Fig. 13 illustrates a light returning principle implemented by the light returning section. The light returning elements 41 are arranged below the light collecting elements 11. The reflective surfaces 42, 43 of the light returning section 40, including the light returning element 41, are arranged to be offset from the reflective surfaces 12, 13 of the light entrance section 10 in the Y-axis direction. In the present example, the offset is P/2. As a result, in the YZ cross-section, the reflective surface 42 reflects leaked light shown in a bold line in the figure, which is a part of the light input into one of the light collecting elements 11 in the -Z direction via the light entrance surface 10a, which passes though the light guiding section 20 via a region on the +Y side with respect to the center of each of the light collecting elements 11 and the -Y side of the reflective surface 12, leaks from the -Z surface of the light guiding section 20 and enters one of the light returning elements 41, or a light returning element 41a in the present example, toward the continuous section 71 described below. In the present example, the reflective surface 42 reflects toward the continuous section 71, or a rightmost continuous section 71 in the figure, positioned on a boundary between two of the light returning elements 41b, 41c adjacent to the +Y side of the light returning element 41a. The reflective surface 43 reflects leaked light not shown, which is a part of the light input into one of the light collecting elements 11 in the -Z direction via the light entrance surface 10a, which passes through the light guiding section 20 via a region on the -Y side with respect to the center of each of the light collecting elements 11 and the +Y side of the reflective surface 13, leaks from the -Z surface of the light guiding section 20 and enters the light returning element 41a toward another continuous section 71 positioned on a boundary between two of the light returning elements 41 adjacent to the -Y side of one of the light returning elements 41.

Further, referring to the light returning element 41, a boundary between each of the light returning elements 41 and the space 40t, or the ±Y side surfaces of each of the light returning elements 41 serve as refractive surfaces 44, 45 which refract leaked light reflected by the reflective surfaces 42, 43 toward the continuous section 71. Here, the refractive surface 44 formed on the +Y side surface of the light returning element 41a and the refractive surface 45 formed on the -Y side surface of the light returning element 41b adjacent to the +Y side of the light returning element 41a form portions of two circles 49 in contact with one another in the Y-axis direction, in other words, arcs opposed to one another. As a result, the refractive surfaces 44, 45 being opposed to one another and the space 40t positioned therebetween form a focal point 49a on the boundary between the light returning element 41b and the light returning element 41c adjacent to the +Y side of the light returning element 41b, or the center of the continuous section 71. The leaked light reflected by the reflective surface 42 within the light returning element 41a exits to the space 40t via the refractive surface 44, enters the light returning element 41b via the refractive surface 45 of the light returning element 41b, is collected to the focal point 49a and returned to the light guiding section 20 via the continuous section 71. Similarly, the leaked light reflected by the reflective surface 43 within the light returning element 41a will be collected via the refractive surface formed on the -Y side surface of the light returning element 41a, the space, the refractive surface formed on the +Y side surface of the light returning element adjacent to the -Y side of the light returning element 41a and returned to the light guiding section 20 via the continuous section, all of which is not shown.

The boundary section 70 is positioned at a boundary between a boundary between the light guiding section 20 and the light returning section 40, and includes the continuous section 71 and non-continuous section 72.

The continuous section 71 is provided so that the light guiding section 20 and the light returning section 40 are physically continuously connected to one another, and returns leaked light reflected by the reflective surfaces 42, 43 of the light returning section 40, including the light returning elements 41, into the light guiding section 20. The continuous section 71 is formed to have a plate-like shape extending in the X-axis direction and is arranged on a boundary between two of the light returning elements 41 adjacent to one another. The continuous section 31 can be formed of a same material as the light returning element 41.

The non-continuous section 72 is provided so that the light guiding section 20 and the light returning section 40 are spaced apart from one another, and is arranged where the continuous section 71 is positioned between the ±Y ends of the light returning elements 41. Because the +Z surface of the light returning section 40 is spaced apart from the light guiding section 20 by the non-continuous section 72 to form a space 70s therebetween, the -Z end surface of the light guiding section 20 serves as a reflective surface which reflects light, traveling from the inside of the light guiding section 20 toward the light returning section 40, in the +Z direction.

In the present embodiment, continuous sections 71, each being the continuous section 71, and non-continuous sections 72, each being the non-continuous section 72, are alternately arranged at a boundary between the light guiding section 20 and the light returning section 40 in the Y-axis direction. Here, at least a part of the continuous section 31 and at least a part of the non-continuous section 72 are provided to overlap with one another when viewed in the Z-axis direction. The non-continuous section 72 is provided so that a separation distance between the light guiding section 20 and the light returning section 40 is constant along the Y-axis direction.

Further, The continuous sections 71 are cyclically arrayed with a pitch P in the Y-axis direction and further arranged so that each of the continuous sections 71 is shorter than each of the non-continuous sections 72, in other words, the width of the continuous section 71/pitch P is small. As a result, the light guided within the light guiding section 20 is returned into the light guiding section 20 by being reflected by the -Z end surface where the non-continuous sections 72 are positioned, so that leakage of the light to the light returning section 40 and then to the outside the light guide 1 via the continuous section 71 can be reduced.

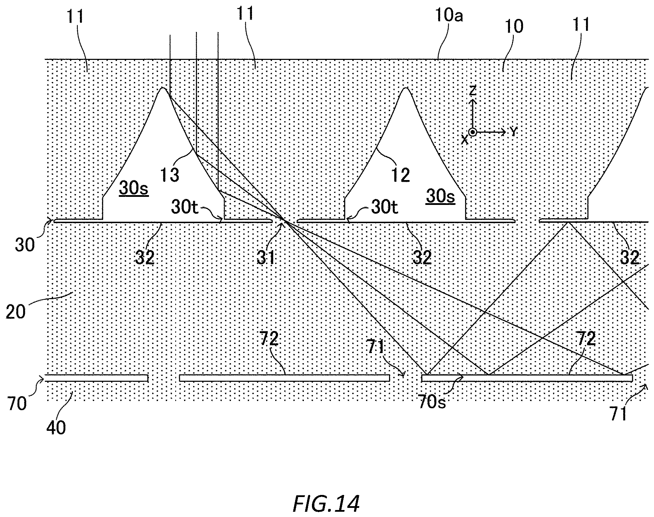

Fig. 14 illustrates a light guiding principle of the light guiding section 20. A center of the continuous section 71 is arranged to be offset from the reflective surfaces 42, 43 of the light returning section 40, including the light returning elements 41, and the reflective surfaces 12, 13 of the light entrance section 10, including the light collecting elements 11, in the Y-axis direction. In the present embodiment, the center of the continuous section 71 is arranged below, or on the -Z side of, the boundary between two of the light collecting elements 11 adjacent to one another. Alternatively, the center of the continuous section 71 may be arranged below the reflective surfaces 12, 13 of each of the light collecting elements 11. Thus, the light entering the light guiding section 20 from the light collecting elements 11 without being reflected by the reflective surfaces 12, 13 via a region therebetween will not enter the light returning section 40 via the continuous section 71.

The non-continuous section 72 is widely formed on the +Z surface of each of the light returning elements 41 to reflect the light reflected by the reflective surfaces 12, 13 of the light entrance section 10 and enters the light guiding section 20 via the continuous section 31. Here, the light reflected by the +Z side of the reflective surface 13 passes through the continuous section 31 at a small angle with respect to the Z axis and enters a vicinity of a -Y end of the non-continuous section 72 on the light returning element 41 adjacent to the +Y side at an angle equal to or greater than the critical angle, the light reflected at the middle part of the reflective surface 13 passes through the continuous section 31 at a medium angle with respect to the Z axis and enters the middle part of the non-continuous section 72 at an angle equal to or greater than the critical angle, and the light reflected by the -Z side of the reflective surface 13 passes through the continuous section 31 at a large angle with respect to the Z axis and enters a vicinity of a +Y end of the non-continuous section 72 at an angle equal to or greater than the critical angle, so that each of the light is reflected by the reflective surface on the non-continuous section 72. A large part of the light entering the light guiding section 20 via the reflective surfaces 12, 13 of the light entrance section 10 and the continuous section 31 can be reflected by the reflective surface on the non-continuous section 72 and returned, or confined, within the light guiding section 20.

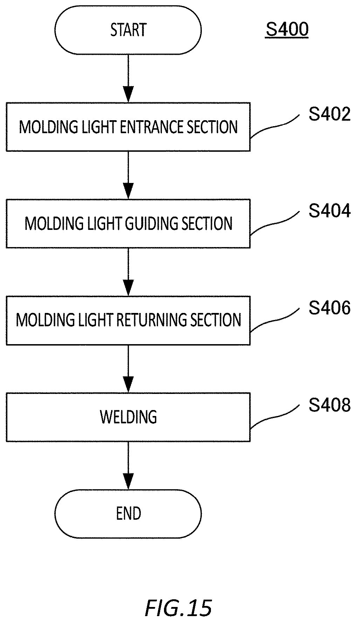

Fig. 15 illustrates a fourth manufacturing method flow S400 of a light guide 1d4. In the present embodiment, as an example, the acrylic resin is used as the molding material of the light guide 1d2. In other words, the light entrance section 10, the light guiding section 20 and the light returning section 40 are formed of a same material.

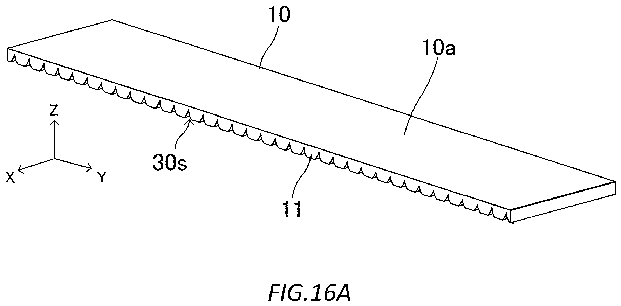

In Step S402, the light entrance section 10 is molded. The light entrance section 10 can be molded by Steps S201 to S203 described above. Fig. 16A illustrates a configuration of the light entrance section 10 molded. The light entrance section 10 is formed as a body separate from the light guiding section 20 and the light returning section 40.

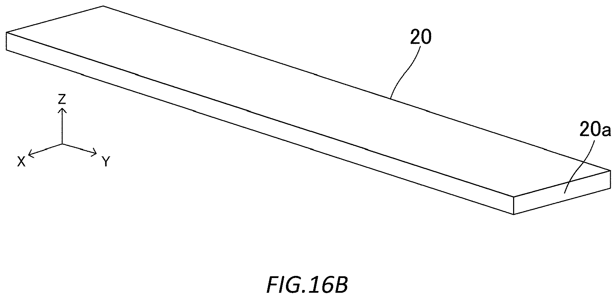

In Step S404, the light guiding section 20 is molded. The detail of molding is omitted. Fig. 16B illustrates a configuration of the light guiding section 20 molded. The light guiding section 20 is formed as a body separate from the light entrance section 10 and the light returning section 40.

In Step S406, the light returning section 40 is molded. The light returning section 40 can be molded by using a method similar to the light entrance section 10. In other words, the light returning section 40 is molded by laying a mold having a plurality of grooves arrayed in the Y-axis direction and each including an internal space having a size and shape which can accommodate the light returning section 40 and having a cross-sectional shape complementary with the continuous section 71 on a top surface on a mold having a plurality of protrusions arrayed in the Y-axis direction and each having a cross-sectional shape complementary with the spaces 40s, 40t on an upper surface, so that an internal space is formed between the molds, and extracting the acrylic resin into the internal space.

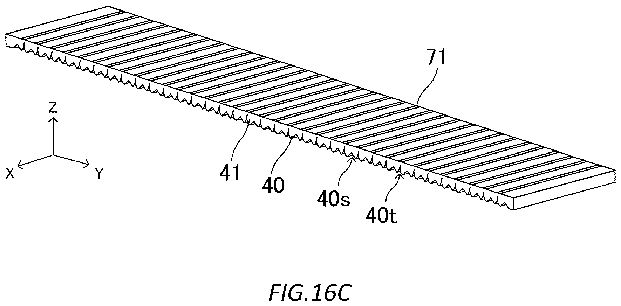

Fig. 16C illustrates a configuration of the light returning section 40 molded. In the light returning section 40, the plurality of light returning elements 41 are connected in the Y-axis direction, so that the continuous section 71 is arranged on the boundary between the light returning elements 41 adjacent to one another on the +Z surface and the spaces 40s, 40t are formed side by side in the Y-axis direction on the -Z surface.

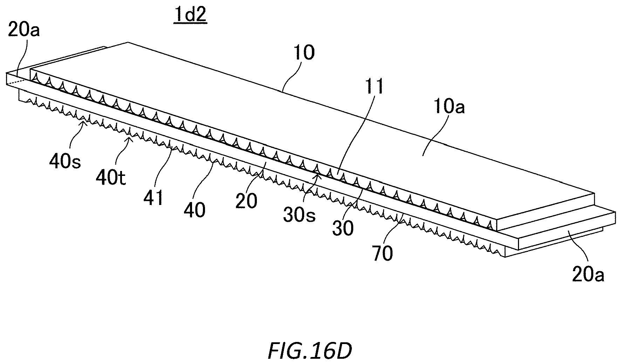

In Step S406, the light guide 1d2 is formed by welding the light entrance section 10, the light guiding section 20 and the light returning section 40. As illustrated in Fig. 16D, the light entrance section 10 is arranged on the +Z end surface of the light guiding section 20 with one end surface on which the spaces 30s are formed facing the -Z side and the light returning section 40 is arranged on the -Z end surface of the light guiding section 20 with one end surface on which the spaces 40s, 40t are formed facing the -Z side. As a result, the continuous section 31 integrally molded on the -Z surface of the light entrance section 10 abuts the +Z end surface of the light guiding section 20 and the continuous section 71 integrally molded on the +Z surface of the light returning section 40 abuts the -Z end surface of the light guiding section 20. In this state, the light entrance section 10, the light guiding section 20 and the light returning section 40 are welded by applying ultrasonic vibration to at least one of them. As a result, the light entrance section 10 and the light guiding section 20 are joined to one another via the continuous section 31 and the light guiding section 20 and the light returning section 40 are joined to one another via the continuous section 71, so that the light guide 1d2 is formed.

For example, without being limited to the welding, the light entrance section 10, the light guiding section 20 and the light returning section 40 may be bonded to one another by using a solvent. The light guide 1d2 may be molded by using a 3D printer.

The light guide 1d2 according to the second embodiment is an optical device which guides the light input from the light entrance surface 10a to the light exit surface 20a, which is different from the light entrance surface 10a, so that the light is output from the light exit surface 20a, and includes: the light entrance section 10 having the light entrance surface 10a in which the light is input in the Z-axis direction; the light guiding section 20 which is arranged on a side with the light exit surface 20a and which guides the light in the Y-axis direction so that the light is output from the light exit surface 20a; the continuous section 31 and the non-continuous section 32 each arranged at the boundary between the light entrance section 10 and the light guiding section 20, the continuous section 31 being provided so that the light entrance section 10 and the light guiding section 20 are continuously connected and the non-continuous section 32 being provided so that the light entrance section 10 and the light guiding section 20 are spaced apart from one another; and the light returning section 40 which is arranged on a side opposite to the light entrance section 10 with respect to the light guiding section 20 in the Z-axis direction and returns leaked light leaked from the light guiding section 20 to the light guiding section 20. According to the above, a large part of the light entering the light entrance section 10 can be confined within the light guiding section 20 so that the light is output from the light exit surface 20a, by the light returning section 40 returning, to the light guiding section 20, light input from the light entrance section 10, including the light collecting elements 11, without being reflected by the reflective surfaces 12, 13 via a region therebetween and the light guiding section 20 to the light returning section 40, or leaked light.

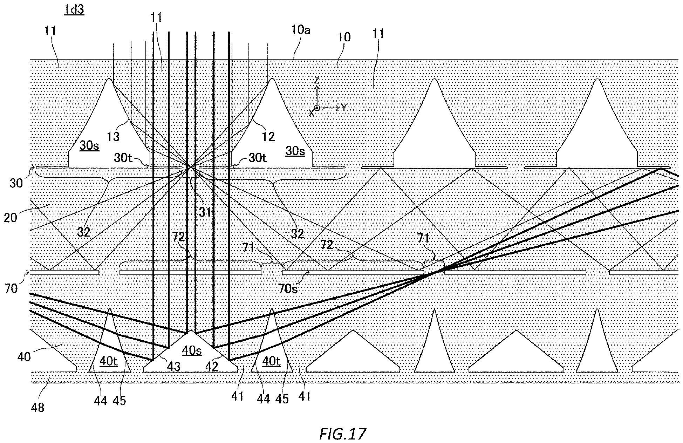

Fig. 17 illustrates a configuration of a light guide 1d3 according to the second variant. Compared to the light guide 1d2 according to the second embodiment, the light guide 1d3 further includes a bottom section 48. The bottom section 48 is formed in a plate-like shape having a longitudinal axis in the Y-axis direction using a same material as the light returning section 40 and is fused to the -Z surface of the light returning section 40. The bottom section 48 and the light returning section 40 may be integrally formed. As a result, the leaked light leaked to the -Z side without being reflected by the reflective surfaces 42, 43 can be reflected by the -Z surface of the bottom section 48, guided to be confined within the bottom section 48 in the Y-axis direction, and returned in the +Z direction.

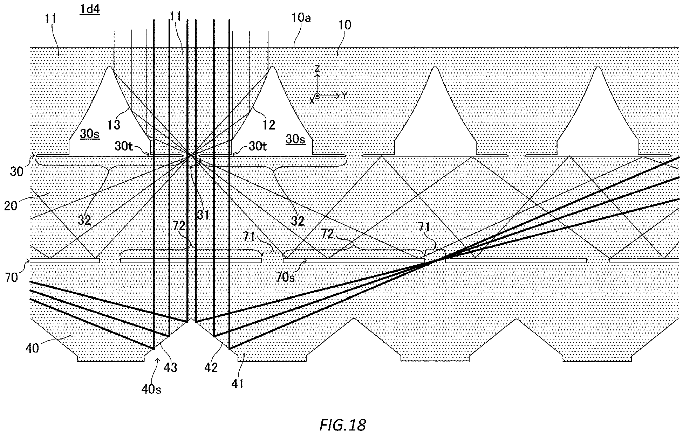

Fig. 18 illustrates a configuration of a light guide 1d4 according to a third variant. Compared to the light returning section 40 in the light guide 1d2 according to the second embodiment, the light guide 1d4 includes a light returning section 40d in which only a space 40s is formed on the -Z surface. Here, a reflective film may be provided on the reflective surfaces 42, 43 using, for example, metal so that the leaked light is totally reflected even if the leaked light enters at an angle equal to or smaller than the critical angle. The reflective surfaces 42, 43 may be parabolically curved or bent so that the leaked light reflected by the reflective surfaces 42, 43 is collected to the continuous section 71 on the boundary between two of the light returning elements 41 adjacent to the +Y side. As a result, a large part of the light entering the light entrance section 10 can be confined in the light guiding section 20 so that the light is output from the light exit surface 20a, by the light returning section 40 returning, to the light guiding section 20, the light input from the light entrance section 10, including the light collecting elements 11, without being reflected by the reflective surfaces 12, 13 via a region therebetween and the light guiding section 20 to the light returning section 40, or leaked light.

While, in the light guide 1d2 according to the second embodiment, and the light guides 1d3, 1d4 according to the second and third variants, the light guiding section 20 is formed in the plate-like shape to extend in the Y-axis direction orthogonal to the input direction of the light, or the Z-axis direction, the light guiding section 20 may be, without being limited to the above, formed to be curved in any direction intersecting the input direction, for example, curved to have an arc shape or a spherical shell shape. The light guiding section 20 may be formed to extend to be curved or bent from a portion overlapped with the light entrance section 10 in any direction or may be formed to extend to the light exit surface 20a with an increasing width or a decreasing width, an increasing thickness or a decreasing thickness. As a result, the light collected by the light entrance section 10 is, after being guided into the light guiding section 20, guided toward the light exit surface 20a in any direction while being reflected by the end surface of the light guiding section 20.

The light output from the light exit surface 20a of each of the light guides 1d2, 1d3, 1d4 may be input to another light guide, such as an optic fiber, different from the light guides 1d2, 1d3, 1d4 and be output, or emitted, at another end of the another light guide.

### <<Third Embodiment>>

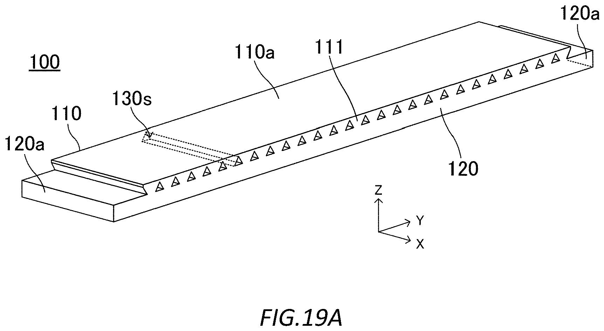

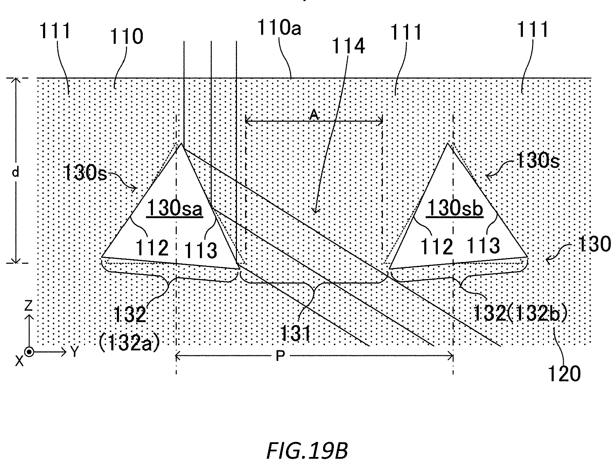

Fig. 19A and Fig. 19B respectively illustrate an overall configuration of a light guide 100 according to a third embodiment, and a configuration of a light entrance section 110 and a boundary section 130 between the light entrance section 110 and a light guiding section 120. The light guide 100 is an optical device which efficiently collects light input from a light entrance surface 110a and guides the collected light to a light exit surface 120a, which is different from the light entrance surface 110a, so that the light is output without leakage or with low leakage, and includes the light entrance section 110, the light guiding section 120 and the boundary section 130. The light guide 100 generally has a substantially plate-like shape which bidimensionally expands in the X-axis direction as a transverse direction and the Y-axis direction as a longitudinal axis and has a thickness in the Z-axis direction.

The light entrance section 110 is an optical member which collects light input in an input direction, or the -Z direction in the present embodiment, via the light entrance surface 110a, and has a plurality of light collecting elements 111. The plurality of light collecting elements 111 are columnar members each of which has a cross-section having an inverted substantially isosceles trapezoidal shape with a maximum width P in the Y-axis direction and a height d in the Z-axis direction and extends in the X-axis direction, and are arrayed in parallel in the Y-axis direction so that +Z sides of Y side surfaces, or a +Y side surface and a -Y side surface are in contact with one another and -Z sides are spaced apart from one another. In the present embodiment, the plurality of light collecting elements 111 are integrally molded to be connected to one another, while the light entrance section 110 is described to include the plurality of light collecting elements 111 for convenience of description of the configuration and functionality of the light entrance section 110. As a result, the light entrance section 110 extends in the Y-axis direction and +Z surfaces of the plurality of light collecting elements 111 are connected to one another to form the light entrance surface 110a having a planar shape having a width in the X-axis direction. In this manner, the light entrance surface 110a is provided so that the light is input from the +Z side. Two of the light collecting elements 111 adjacent to one another form a hollow space therebetween, which will be simply referred to as a space, 130s which has a cross-section having a triangular shape and extends in the X-axis direction.

The plurality of light collecting elements 111 may be arrayed in parallel to be spaced apart from one another in the Y-axis direction. In such a case, each of the +Z surfaces of the plurality of light collecting elements 111 serves as an independent light entrance surface.

Each of the light collecting elements 111 has reflective surfaces 112, 113 and a light transmitting section 114 positioned below, or in the -Z direction from, the light entrance surface 110a. Here, each of the light collecting elements 111 can be formed by using, for example, the resin having the high refractive index such as the acrylic resin (refractive index: 1.49) and the polycarbonate resin (refractive index: 1.58), or, alternatively, the glass (refractive index: 1.51 to 1.53 for BK7, for example). A boundary between each of the light collecting elements 111 and the space 130s, or each of the ±Y side surfaces of each of the light collecting elements 111, serves as each of reflective surfaces 112, 113 which reflect a part of the light input into each of the light collecting elements 111 via the light entrance surface 110a. The light is totally reflected when the light enters from an inside of each of the light collecting elements 111 to the ±Y side surfaces at an angle equal to or greater than a critical angle. The critical angle is approximately 42 degrees for the acrylic resin, approximately 41 degrees for the polycarbonate resin, and approximately 42 degrees for the glass. Thus, the ±Y side surfaces of each of the light collecting elements 111 are formed so that each of their normal forms an angle equal to or greater than the critical angle with the input direction of the light, or the Z-axis direction in the present embodiment. Meanwhile, a portion between the reflective surfaces 112, 113 of each of the light collecting elements 111 serves as the light transmitting section 114 which transmits a part of light input from the light entrance surface 110a, or a remaining part which does not enter the reflective surfaces 112, 113 in the present example, and reflected light reflected by the reflective surfaces 112, 113.

The reflective surfaces 112, 113 are arranged to be opposed to one another respectively at positions on the +Y side and the -Y side of the light transmitting section 114, and are provided to reflect the light input from the light entrance surface 110a toward the light transmitting section 114. Here, each of the reflective surfaces 112, 113 are formed in a linear shape on the YZ cross-section. In order to increase the reflectance, the reflective surfaces 112, 113, or the ±Y side surfaces of the light collecting elements 111, may be mirror-finished. A reflective film may be provided by using, for example, metal.

The light guiding section 120 is an optical member which has the light exit surface 120a positioned on the -Z side with respect to the light entrance section 110 and guides reflected light reflected by the reflective surfaces 112, 113 of the light entrance section 110 in the +Y direction and/or the -Y direction so that the light is output from the light exit surface 120a. The light guiding section 120 is formed to have a plate-like shape which extends in the Y-axis direction. Here, a width of the light guiding section 120 in the X-axis direction is equal to, or may be larger than, a width of the light entrance section 110, a length of the light guiding section 120 in the Y-axis direction is larger than, or may be equal to, a length of the light entrance section 110, and a thickness of the light guiding section 120 in the Z-axis direction is larger than a thickness of the light entrance section 110 or may be arbitrarily determined. The +Y side surface and/or the -Y side surface of the light guiding section 120 form the light exit surface 120a through which the light is output and the -Z end surface 120b is formed to have a planar shape so that it serves as a reflective surface which reflects the light guided within the light guiding section 120 toward an inside.

The light guiding section 120 can be formed using a same material as the light entrance section 110, including the light collecting elements 111. In order to increase the reflectance, the -Z end surface 120b of the light guiding section 120 may be mirror-finished. A reflective film may be provided by using, for example, metal.

The boundary section 130 is positioned at a boundary between the light entrance section 110 and the light guiding section 120, and includes a continuous section 131 and a non-continuous section 132.

The continuous section 131 is provided to physically continuously connect the light transmitting section 114 of the light entrance section 110 and the light guiding section 120 to guide light input from the light entrance surface 110a, or reflected light reflected by the reflective surfaces 112, 113 and the remaining light which did not enter the reflective surfaces 112, 113 into the light guiding section 120. The continuous section 131 has an aperture width A in the Y-axis direction and extends in the X-axis direction. The continuous section 131 can be formed of a same material as the light collecting elements 111. The continuous section 131 may be integrally formed with the light entrance section 110 and/or the light guiding section 120 as a part thereof.

The non-continuous section 132 is provided so that the reflective surfaces 112, 113 of the light entrance section 110 and the light guiding section 120 are spaced apart from one another, and is arranged adjacent to each of the ±Y sides of the continuous section 131. Because the light guiding section 120 is spaced apart from the light entrance section 110, or reflective surfaces 112, 113 formed on the ±Y side surfaces, by the non-continuous section 132 to form the space 130s therebetween, an interface between the non-continuous section 132 and the light guiding section 120 serves as a reflective surface which reflects reflected light input from the light transmitting section 114 of the light entrance section 110 via the continuous section 131 to the light guiding section 120 to be guided to the light exit surface 120a. In order to increase the reflectance, an interface between the non-continuous section 132 and the light guiding section 120, or the +Z end surface of the light guiding section 120 below the space 130 may be mirror-finished. A reflective film may be provided by using, for example, metal.

In the third embodiment, a plurality of reflective surfaces 112, 113, each being the reflective surface 112 or 113, of the light entrance section 110 and a plurality of light transmitting sections 114, each being the light transmitting section 114, are arranged within the light entrance section 110 along the Y-axis direction by forming the light entrance section 110 by arraying the light collecting elements 111 in parallel in the Y-axis direction. Correspondingly, a plurality of continuous sections 131, each being the continuous section 131, and a plurality of non-continuous sections 132, each being the non-continuous section 132, are each provided at a boundary of the light entrance section 110 and the light guiding section 120, and the plurality of continuous sections 131 and the plurality of non-continuous sections 132 are alternately arranged along the Y-axis direction. Here, the continuous sections 131 each have a width A, which is equal to a width of the light transmitting section 114, in the Y-axis direction and are cyclically arrayed with a pitch P in the Y-axis direction. The non-continuous sections 132 each have a width substantially equal to that of each of the continuous sections 131 in the present embodiment and are arranged between the continuous sections 131. As a result, the aperture ratio A/P is about 1/2.

As illustrated in Fig. 19B, the reflective surfaces 112, 113 of the light entrance section 110 reflect the light input from the light entrance surface 110a toward the continuous section 131. In particular, the reflective surfaces 112, 113 reflect the light input from a direction orthogonal to the light entrance surface 110a, or the Z-axis direction in the present embodiment, toward the continuous section 131. Here, the light reflected by the reflective surface 112 passes through the continuous section 131 while forming collimated light, in other words, the light reflected on the +Z side of the reflective surface 112 passes through the +Y side of the continuous section 131, the light reflected at the middle part of the reflective surface 112 passes through the middle part of the continuous section 131, and the light reflected on the -Z side of the reflective surface 112 passes through the -Y side of the continuous section 131, so that the light enters the light guiding section 120. The light reflected by the reflective surface 113 enters the light guiding section 120 while forming collimated light, similarly to the light reflected by the reflective surface 112 except that the direction in which the light is heading is opposite.

The non-continuous section 132 includes a non-continuous section 132b provided so that the reflective surface 112 and the light guiding section 120 are spaced apart from one another and a non-continuous section 132a provided so that the reflective surface 113 and the light guiding section 120 are spaced apart from one another by being arranged below the reflective surfaces 112, 113 of the light entrance section 110. By arraying the light collecting elements 111 in parallel in the Y-axis direction within the light entrance section 110, the space 130s which has a cross-section having a triangular shape, when viewed from the Y-direction, formed on an inside of the Y side surfaces of two of the light collecting elements 111 adjacent to one another and the non-continuous section 132, or the +Z end of the light guiding section 120, and the reflective surfaces 112, 113 of the two of the light collecting elements 111 adjacent to one another face away from one another via the space 130s, so that the non-continuous section 132 positioned below each of them are continuously connected to one another.

Further, an end, on a side with the light guiding section 120, of the non-continuous section 132, or an interface between the light guiding section 120 and the non-continuous section 132 is inclined with respect to the Y-axis direction. Here, interfaces between the light guiding section 120 and respective ones of the non-continuous sections 132 adjacent thereto are inclined in different orientations with respect to the Y-axis direction. An interface between the light guiding section 120 and the non-continuous section 132a is inclined in a clockwise direction with respect to the Y-axis and an interface between the light guiding section 120 and the non-continuous section 132b is inclined in an anti-clockwise direction with respect to the Y-axis. The non-continuous sections 132 arrayed in the Y-axis direction include non-continuous sections 132a and non-continuous sections 132b alternately arrayed.

Further, one of the light collecting elements 111 has the reflective surfaces 112, 113 being opposed to one another having opposite and equal angles of inclination with respect to the Z axis. Here, the angles of inclination may be different from one another in each of the light collecting elements 111 adjacent to one another or may be alternately different. The reflective surfaces 112, 113 facing away from one another via the space 130s between the two of the light collecting elements 111 adjacent to one another have different angles of inclination. Cross-sections, each having a triangular shape, of the plurality of spaces 130s arranged side by side in the Y-axis direction may be alternately rotated in different directions. Here, the plurality of spaces 130s is rotated about a reference axis parallel to the X-axis direction passing through a center of each of the spaces 130s on the YZ plane. In the present example, a space 130sa on a left side is rotated clockwise and a space 130sb on a right side is rotated anti-clockwise from a state before rotation which is illustrated in a dotted line in the figure, or a state when a bottom side of the triangle is parallel to the Y-axis direction. As a result, the space 130sa rotated clockwise and the space 130sb rotated anti-clockwise are alternately arrayed in the Y-axis direction.

When the plurality of spaces 130s are not rotated, the boundary section 130 between the light entrance section 110 and the light guiding section 120 forms a straight line extending in the Y-axis direction in the YZ plane and the continuous section 131 and the non-continuous section 132 are also continuously linearly connected in the YZ plane. When the plurality of spaces 130s are rotated, the boundary section 130 forms a non-straight line extending in the Y-axis direction to be repeatedly bent in the ±Z directions in the YZ plane and the continuous section 131 and the non-continuous section 132 are also continuously non-linearly connected in the YZ plane.

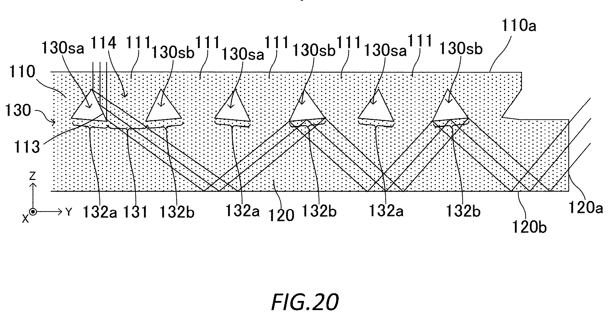

Fig. 20 illustrates collection of the light input to the light guide 1 by the light entrance section 110 and guidance of the light by the light guiding section 120. As an example, an optical path of light entering in the -Z direction from the light entrance surface 110a and reflected by the reflective surface 113, or a right-side inclined surface of a leftmost space 130sa in the figure, of the light entrance section 110 is illustrated. Because the aperture width A of the continuous section 131 is large, or the aperture ratio A/P is nearly equal to 0.5, as described above, light reflected by the reflective surface 113, which is referred to as reflected light, passes through the continuous section 131 while keeping collimated and enters the light guiding section 120. The reflected light entering the light guiding section 120 is guided within the light guiding section 120 rightward so that the light is output from the light exit surface 120a by being reflected by the -Z end surface 120b of the light guiding section 120 and returned in the +Z direction, reflected at an interface with the non-continuous section 132, or the non-continuous section 132b below the third space 130sb to the right from the space 130sa below the reflective surface 113 in the present example, and reflected by the -Z end surface 120b of the light guiding section 120 and returned in the +Z direction, reflected at an interface with the non-continuous section 132b below the second space 130sb further to the right from the space 130sb. Because interfaces between the non-continuous sections 132, or the non-continuous sections 132a, 132b, arrayed in the Y-axis direction and the light guiding section 120 are inclined in alternately different orientations and, further, the reflective surfaces 112, 113 of the light collecting elements 111 arrayed in the Y-axis direction have alternately different angles of inclination, or absolute values of angles of inclination with respect to the Z axis, the light reflected by the reflective surface 113 is guided within the light guiding section 120 by being reflected at the interface of the same non-continuous section 132, which is the non-continuous section 132b in the present example. The angles of inclination of the non-continuous sections 132a, 132b and/or the angles of inclination of the reflective surfaces 112, 113 are determined so that the light entering the light guiding section 120 from the light collecting elements 111 does not leak from the light guide 100 in the +Z direction via the light transmitting section 114 of each of the light collecting elements 111 different from one another, in other words, is reflected by an interface with the plurality of non-continuous section 132.

The light guide 100 according to the third embodiment can be manufactured similarly to the light guide 1 according to the first embodiment.

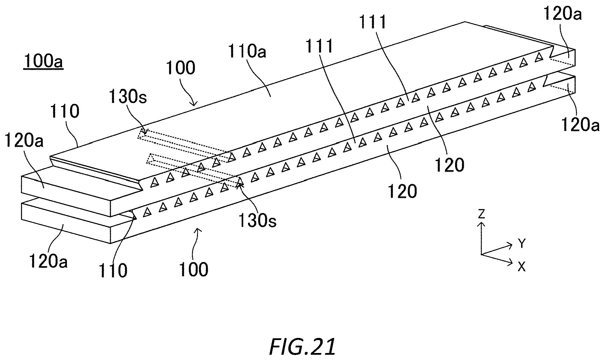

Fig. 21 illustrates a light guide assembly 100a according to the third embodiment. The light guide assembly 100a includes two light guides 100 stacked in the Z-axis direction. Here, the light guide 100 at an upper stage is arranged on the light entrance surface 110a of the light guide 100 at a lower stage. A small gap is provided between the light entrance surface 110a of the light guide 100 at the lower stage and the -Z surface of the light guide 100 at the upper stage. The light guide 100 at the lower stage is also an example of a light collecting section arranged on a side opposite to the light entrance section 110 with respect to the light guiding section 120 of the light guide 100 at the upper stage in the Z-axis direction and provided so that light passing through the light guiding section 120 at the upper stage is input to the light collecting section.

In each of the two light guides 100, the light entrance section 110 is formed to be rotationally symmetric by 180 degrees with respect to the Z-axis direction. In the light guide 100 at the upper stage, the reflective surface 112 is positioned on the +Y end surface and the reflective surface 113 is positioned on the -Y end surface. The light guiding section 120 is also formed to be rotationally symmetric with respect to the Z-axis direction by 180 degrees. Here, a difference between a distance L₁₁₂ from the +Y end of the light guiding section 120 to the reflective surface 112 of the light entrance section 110 closest to the +Y end and a distance L₁₁₃ from the -Y end of the light guiding section 120 to the light entrance section 110 closest to the -Y end is substantially equal to a width of the continuous section 131 and the non-continuous section 132 in the Y-axis direction, or 1/2 of an array pitch P of the plurality of light collecting elements 111.

Thus, in the light guide assembly 100a, the light guide 100 at the lower stage is arranged to be rotated by 180 degrees with respect to the Z axis compared to the light guide 100 at the upper stage. As a result, the reflective surface 113 is positioned on the +Y end surface of the light entrance section 110 and the reflective surface 112 is positioned on the -Y end surface. The light guide 100 at the upper stage is arranged on the light entrance surface 110a of the light guide 100 at the lower stage and respective ±Y end surfaces are aligned. As a result, the light collecting elements 111 of the light guide 100 at the upper stage are arrayed to be offset from the light collecting elements 111 of the light guide 100 at the lower stage by P/2 in the Y-axis direction, so that the reflective surfaces 112, 113 of the plurality of light collecting elements 111 of the light guide 100 at the lower stage are each positioned below, or in the -Z direction from, the light transmitting section 114 of the plurality of light collecting elements 111 of the light guide 100 at the upper stage.

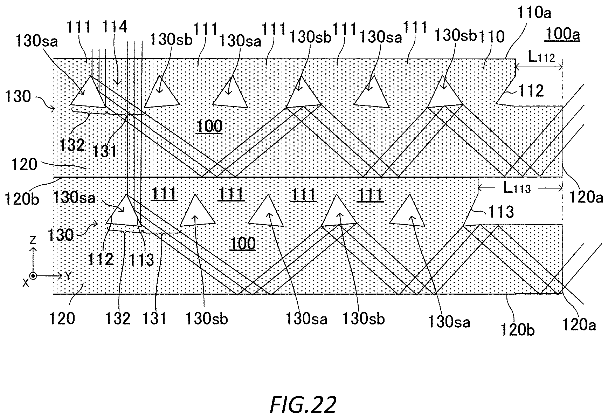

Fig. 22 illustrates a principle of collection of the light input to the light guide assembly 100a by the light entrance section 110 and guidance of the light by the light guiding section 120. Here, an optical path of the light entering the light guiding section 120 without being reflected by the reflective surfaces 112, 113 of the light entrance section 110 of the light guide 100 at the upper stage via the light transmitting section 114 therebetween, or the light transmitting section 114 of the light collecting element 111 on the left in the figure is illustrated. The guidance of the light which enters the reflective surfaces 112, 113 of the light entrance section 110 is as described above using Fig. 2.

The light entering the light guiding section 120 via the light transmitting section 114 of the light entrance section 110 passes through the -Z end surface 120b of the light guiding section 120 and leaks to the outside of the light guide 100 at the upper stage and enter the light guide 100 at the lower stage from its light entrance surface 110a in the -Z direction. Here, by positioning the reflective surfaces 112, 113 of the light guide 100 at the lower stage below the light transmitting section 114 of the light guide 100 at the upper stage, the light passing through the +Y side of the light transmitting section 114 at the upper stage is reflected by the reflective surface 113 on the +Y side at the lower stage, passes through the continuous section 131 while keeping collimated, and enters the light guiding section 120 at the lower stage. As described above using Fig. 2, the reflected light entering the light guiding section 120 is guided within the light guiding section 120 rightward so that the light is output from the light exit surface 120a by being reflected by the -Z end surface 120b of the light guiding section 120 and an interface between the light guiding section 120 and the non-continuous section 132.

The light, not shown, passing through the -Y side of the light transmitting section 114 at the upper stage is reflected by the reflective surface 112 on the -Y side at the lower stage, passes through the adjacent continuous section 131 while keeping collimated, and enters the light guiding section 120 at the lower stage. The reflected light entering the light guiding section 120 is guided within the light guiding section 120 leftward so that the light is output from another light exit surface 120a.

In this manner, a large part of the light entering the light guide assembly 100a can be confined within the light guiding section 120 so that the light is output from the light exit surface 120a, by the light guide 100 at the lower stage collecting the light exiting from the light entrance section 110, including the light collecting elements 111, of the light guide 100 at the upper stage without being reflected by the reflective surfaces 112, 113 via the light transmitting section 114 therebetween and the light guiding section 120 to an outside of the light guide 100, or leaked light.

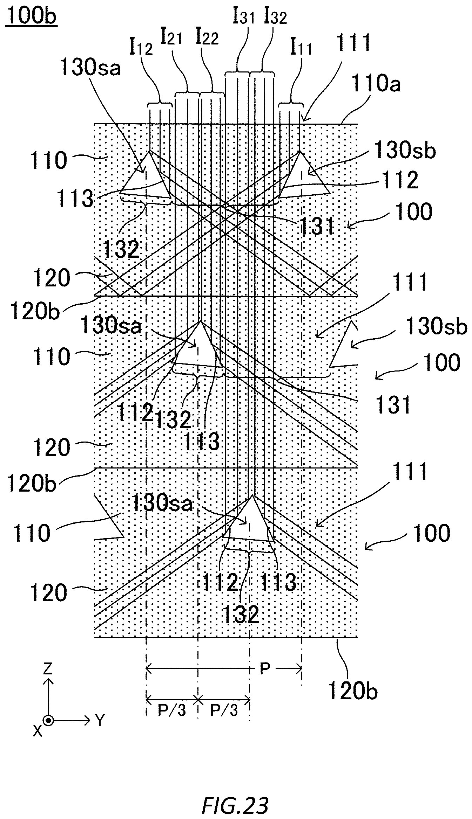

Fig. 23 illustrates a configuration and a light focus principle of a light guide assembly 100b according to a variant. The light guide assembly 100b includes three light guides 100 stacked in the Z-axis direction. Here, the light guide 100 at a middle stage is arranged on the light entrance surface 110a of the light guide 100 at a lower stage and the light guide 100 at an upper stage is arranged on the light entrance surface 110a of the light guide 100 at the middle stage. A small gap is provided between the three light guides 100. In each of the light guides 100, the continuous section 131 has a width twice the non-continuous section 132 and the three light guides 100 are arrayed so that respective light collecting elements 111 are offset by P/3 in the Y-axis direction. As a result, the reflective surfaces 112, 113 of the light collecting elements 111 of the light guides 100 at the middle stage and the lower stage are positioned below, or in the -Z direction from, the light transmitting section 114 of the light collecting elements 111 of the light guide 100 at the upper stage.

Light I11 and I12, as a part of the light which enters the light entrance surface 110a of the light guide 100 at an upper end, are guided within the light guiding section 120 at the upper stage so that the light is output from the light exit surface 120a by each being reflected by the reflective surfaces 112, 113 of the light entrance section 110 at the upper stage. As a part of light passing through the light transmitting section 114 between the reflective surfaces 112, 113 of the light guide 100 at the upper end, light I21, I22 passing through the -Y side are guided within the light guiding section 120 at the middle stage by each being reflected by the reflective surfaces 112, 113 of the light entrance section 110 at the middle stage, light I31, I32 passing through the +Y side are guided within the light guiding section 120 at the lower stage by each being reflected by the reflective surfaces 112, 113 of the light entrance section 110 at the lower stage, so that the light is output from the light exit surface 120a of the respective light guide 100. In this manner, the light guide assembly may have a configuration in which widths of the reflective surfaces 112, 113 of the light entrance section 110 and the continuous section 131 are changed (1 to n-1) and the light guides 100 are stacked in a plurality (N) of stages and arranged to be offset by P/N in the Y-axis direction.

The light guide 100 according to the third embodiment guides the light input from the light entrance surface 110a to the light exit surface 120a so that the light is output from the light exit surface 120a, and has: a light entrance surface 110a to which light is input in the -Z direction; and the reflective surfaces 112, 113 and the light transmitting section 114 positioned in the -Z direction with respect to the light entrance surface 110a, wherein the reflective surfaces 112, 113 reflects a part of the light input from the light entrance surface 110a and the light transmitting section 114 transmits another part of the light input from the light entrance surface 110a and reflected light reflected by the reflective surfaces 112, 113 and has the light entrance section 110 and the light exit surface 120a positioned on the -Z side with respect to the light entrance section 110, and includes: the light guiding section 120 which guides the reflected light in the Y-axis direction so that the light is output from the light exit surface 120a; the continuous section 131 and the non-continuous section 132 each arranged at the boundary between the light entrance section 110 and the light guiding section 120, wherein the continuous section 131 is provided so that the light transmitting section 114 and the light guiding section 120 are continuously connected and the non-continuous section 132 is provided so that the reflective surfaces 112, 113 and the light guiding section 120 are spaced apart from one another. According to the above, a large part of the light collected by the light entrance section 110 can be output from the light exit surface 120a, by a part of the light input to the light entrance section 110 in the -Z direction via the light entrance surface 110a being reflected by the reflective surfaces 112, 113 of the light entrance section 110 and the reflected light entering the light guiding section 120 from the light transmitting section 114 of the light entrance section 110 via the continuous section 131 to be guided within the light guiding section 120 along the Y-axis.

The light guide assembly 100a according to the third embodiment includes two light guides 100 stacked in the Z-axis direction. According to the above, a large part of light entering the light guide assembly 100a can be confined in the light guiding section 120 so that the light is output from the light exit surface 120a, by collecting, by the light guide 100 at the lower stage, light exited from the light entrance section 110, including the light collecting elements 111, of the light guide 100 at the upper stage without being reflected by the reflective surfaces 112, 113 via the light transmitting section 114 and the light guiding section 120 therebetween to an outside of the light guide 100, or leaked light.

An upper surface, or the light entrance surface 110a of the light entrance section 110, and a lower surface, or the -Z surface of the light guiding section 120, of the light guide 100 according to the third embodiment may each be a smooth surface. As a result, deposition of, for example, dust can be prevented when the light guide 100 is placed outdoors.

While in the light guide 100 according to the third embodiment, the light guiding section 120 is formed in the plate-like shape to extend in the Y-axis direction orthogonal to the input direction of the light, or the Z-axis direction, the light guiding section 120 may be, without being limited to the above, formed to be curved in any direction intersecting the input direction, for example, curved in an arc shape or a spherical shell shape. The light guiding section 120 may be formed to extend to be curved or bent from a portion overlapping with the light entrance section 110 in any direction or may be formed to extend to the light exit surface 120a with an increasing width or a decreasing width, an increasing thickness or a decreasing thickness. As a result, the light collected by the light entrance section 110 is, after being guided into the light guiding section 120, guided toward the light exit surface 120a in any direction while being reflected by the end surface of the light guiding section 120.

The light output from the light exit surface 120a of the light guide 100 may be input to another light guide, such as an optic fiber, different from the light guide 100 and be output, or emitted, from another end of the another light guide.

While the embodiments of the present invention have been described, the technical scope of the invention is not limited to the embodiments described above. It is apparent to persons skilled in the art that various alterations or improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

1, 1d, 1d2, 1d3, 1d4: light guide, 10, 10d: light entrance section, 10a: light entrance surface, 11, 11d: light collecting element, 12, 13, 14: reflective surface, 19: parabola, 19a: directrix, 19b: focal point, 20, 20d: light guiding section, 20a: light exit surface, 20d: light guiding section, 30, 30d: boundary section, 30s, 30t: space, 31: continuous section, 32: non-continuous section, 40, 40d: light returning section, 40s, 40t: space, 41, 41a, 41b: light returning element, 42, 43: reflective surface, 44, 45: refractive surface, 48: bottom section, 49: circle, 49a: focal point, 50s: internal space, 51, 52: mold, 53: insert, 61, 62, 63: mold, 61s, 63s: internal space, 62a: protrusion, 65: insert, 70: boundary section, 70s: space, 71: continuous section, 72: non-continuous section, 80: angle of incidence, 99: trajectory plane, 100: light guide, 100a, 100b: light guide assembly, 110: light entrance section, 110a: light entrance surface, 111: light collecting element, 112, 113: reflective surface, 114: light transmitting section, 120: light guiding section, 120a: light exit surface, 120b: -Z end surface, 130: boundary section, 130s, 130sa, 130sb: space, 131: continuous section, 132, 132a, 132b: non-continuous section, I11, I12, I21, I22, I31, I32: light.

## Claims

1. A light guide which guides light input from a light entrance surface to a light exit surface, which is different from the light entrance surface, so that the light is output from the light exit surface, comprising:
a light entrance section having the light entrance surface provided so that the light is input from a first direction;
a light guiding section which is arranged closer to the light exit surface than the light entrance section and which guides the light in a second direction intersecting the first direction so that the light is output from the light exit surface; and
a continuous section and a non-continuous section each arranged at a boundary between the light entrance section and the light guiding section, the continuous section being provided so that the light entrance section and the light guiding section are continuously connected and the non-continuous section being provided so that the light entrance section and the light guiding section are spaced apart from one another.

2. The light guide according to claim 1, wherein a plurality of continuous sections, each being the continuous section, and a plurality of non-continuous sections, each being the non-continuous section, are each provided at the boundary between the light entrance section and the light guiding section, and the plurality of continuous sections and the plurality of non-continuous sections are alternately arranged along the second direction.

3. The light guide according to claim 2, wherein the continuous section and the non-continuous section are arranged so that a length of the continuous section is shorter than a length of the non-continuous section in the second direction.

4. The light guide according to any one of claims 1 to 3, wherein the light entrance section has a reflective surface provided to reflect the light input from the light entrance surface toward the continuous section.

5. The light guide according to claim 4, wherein the reflective surface is formed to reflect the light input from a direction orthogonal to the light entrance surface toward the continuous section.

6. The light guide according to claim 5, wherein the reflective surface is formed to be curved or bent on a cross-section including the first direction and the second direction.

7. The light guide according to claim 5 or 6, further having another reflective surface which is arranged to be opposed to the reflective surface and which reflects the light input from the light entrance surface toward the continuous section.

8. The light guide according to any one of claims 1 to 7, wherein the light entrance section extends in the second direction and the light entrance surface is formed in a planar shape having a width in a third direction intersecting each of the first direction and the second direction.

9. The light guide according to claim 8, the light guiding section is formed to extend in the second direction.

10. The light guide according to claim 9, wherein an end, on a side opposite to the light entrance section, of the light guiding section in the first direction is formed in a planar shape.

11. The light guide according to any one of claims 8 to 10, wherein the continuous section is formed to extend in the third direction.

12. The light guide according to claim 11, wherein the continuous section is arranged so that the third direction is substantially parallel to a plane including a trajectory of the sun.

13. The light guide according to any one of claims 1 to 12, wherein the light entrance section and the light guiding section are each formed as a body separate from one another and are formed by being joined to one another via the continuous section.

14. The light guide according to claim 13, wherein the light entrance section and the light guiding section are joined by welding.

15. The light guide according to any one of claims 1 to 14, wherein the light entrance section and the light guiding section are formed of a same material.

16. The light guide according to any one of claims 1 to 15, wherein the non-continuous section includes a first non-continuous section in which a separation distance between the light entrance section and the light guiding section is constant along the second direction and a second non-continuous section in which a separation distance between the light entrance section and the light guiding section is inconstant along the second direction.

17. The light guide according to claim 16, wherein
the light entrance section has a reflective surface provided to reflect the light input from the light entrance surface toward the continuous section, and
an opposite surface, facing toward a side with the light guiding section, of the reflective surface is provided to constitute an end, on a side with the light entrance section, of the second non-continuous section.

18. The light guide according to any one of claims 1 to 15, further comprising a light collecting section which is arranged on a side opposite to the light entrance section with respect to the light guiding section in the first direction and which is provided so that the light passing through the light guiding section is input to the light collecting section.

19. The light guide according to claim 18, further comprising another continuous section and another non-continuous section each arranged at another boundary between the light guiding section and the light collecting section, the another continuous section being provided so that the light guiding section and the light collecting section continuously connected and the another non-continuous section being provided so that the light guiding section and the light collecting section are spaced apart from one another.

20. The light guide according to claim 19, wherein the light collecting section includes a light returning section which returns passing-through light which passed through the light guiding section to the light guiding section.

21. The light guide according to claim 20, wherein the light returning section has further another reflective surface which reflects the passing-through light toward the another continuous section.

22. The light guide according to claim 21, wherein the light returning section has a refractive surface which refracts the passing-through light reflected by the further another reflective surface toward the another continuous section.

23. The light guide according to claim 21 or 22, wherein
the light entrance section has a reflective surface provided to reflect the light input from the light entrance surface toward the continuous section, and
the further another reflective surface of the light returning section is arranged to be offset from the reflective surface of the light entrance section in the second direction.

24. The light guide according to any one of claims 21 to 22, wherein
the light entrance section has a reflective surface provided to reflect the light input from the light entrance surface toward the continuous section,
the another continuous section and the another non-continuous section are arranged so that a length of the another continuous section is shorter than a length of the another non-continuous section in the second direction, and
a center of the another continuous section is arranged to be offset from the further another reflective surface of the light returning section and the reflective surface of the light entrance section in the second direction.

25. The light guide according to any one of claims 19 to 24, wherein at least a part of the continuous section and at least a part of the another non-continuous section are provided to be overlapped with one another when viewed in the first direction.

26. The light guide according to any one of claims 19 to 25, wherein the another non-continuous section is provided so that a separation distance between the light guiding section and the light collecting section is constant along the second direction.

27. The light guide according to any one of claims 1 to 26, wherein the light entrance section has a reflective surface provided to reflect the light input from the light entrance surface and the reflective surface is formed in a linear shape on a cross-section including the first direction and the second direction.

28. The light guide according to any one of claims 1 to 26, wherein the non-continuous section is provided so that an end, on a side with the light guiding section, of the non-continuous section extends to be inclined with respect to the second direction.
